# FASCICULE DE BREVET EUROPEEN

(11) **EP 2 855 234 B1**
(45) Date de publication et mention de la délivrance du brevet: **06.07.2016**
(21) Numéro de dépôt: 13728486.5
(22) Date de dépôt: 24.05.2013
(51) Int. Cl.: B62B 7/08, B62B 1/20, B62B 3/02, A47B 3/00, A47C 4/04

(54) **STRUCTURE DE PLIAGE A ANTIPARALLELOGRAMME ET LANDAU ASSOCIE**
KLAPPMECHANISMUS DER ANTIPARALLELOGRAMMISCHEN ART UND ENTSPRECHENDER KINDERWAGEN
FOLDABLE STRUCTURE OF THE ANTIPARALLELOGRAM TYPE AND ASSOCIATED PRAM

(30) Priorité: 25.05.2012 FR 1254874
(43) Date de publication de la demande: 08.04.2015
(73) Titulaire: Herbault, Patrick, 92250 La Garenne Colombes (FR)
(72) Inventeur: HERBAULT, Patrick, F-92250 La Garenne Colombes (FR)
(74) Mandataire: Cabinet Camus Lebkiri
(86) Numéro de dépôt international: PCT/FR2013/051151
(87) Numéro de publication internationale: WO 2013/175145

(56) Documents cités:
- WO-A1-2010/000987
- US-A1- 2007 024 029
- US-A1- 2011 227 373
- US-B2- 7 178 822

## Description

### DOMAINE

L'invention concerne le domaine des structures de pliage à antiparallélogramme, notamment des structures portantes. Plus particulièrement, l'invention se rapporte selon certaines applications au domaine des poussettes pliables et des landaus. L'invention concerne plus particulièrement les dispositifs de pliages pour poussette permettant de réduire l'encombrement de ces dernières lorsqu'elles sont pliées.

### ETAT DE L'ART

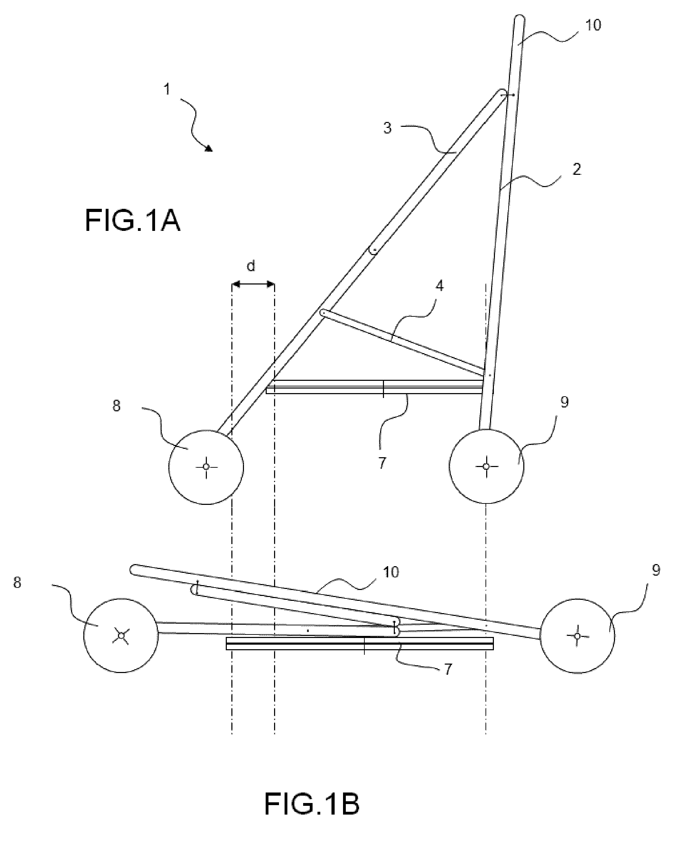

Actuellement, il existe différentes techniques pour plier et déplier des poussettes. Parmi ces solutions, il existe tout une famille de poussettes qui au moment du pliage associe un mouvement de rabattement de la structure de guidage avec une diminution en largeur de cette dernière. Parmi cette famille, on trouve notamment les modèles du type Maclaren, dont un exemple est représenté à la figure 1. Ces dernières permettent de réduire un encombrement dans l'espace lors du pliage de la poussette.
La figure 1A représente une poussette 1 non pliée comprenant une armature de guidage comprenant des poignées 10, des bras arrière 2, des bras avant 3 et des moyens de liaisons 4. En outre, la poussette comprend un ensemble de roues avant 8 et arrière 9 et un premier dispositif de pliage 7 disposé dans un plan horizontal et sensiblement parallèle au plan horizontal comprenant les points de contacts ou le centre des roues.
La figure 1B représente une poussette 1 pliée. Les moyens de liaisons 4 permettent un pliage de l'armature en la ramenant dans le plan formé par les roues 8, 9. L'encombrement au niveau de la hauteur de la poussette est réduit par l'abaissement de l'armature de guidage dans un plan sensiblement horizontal.

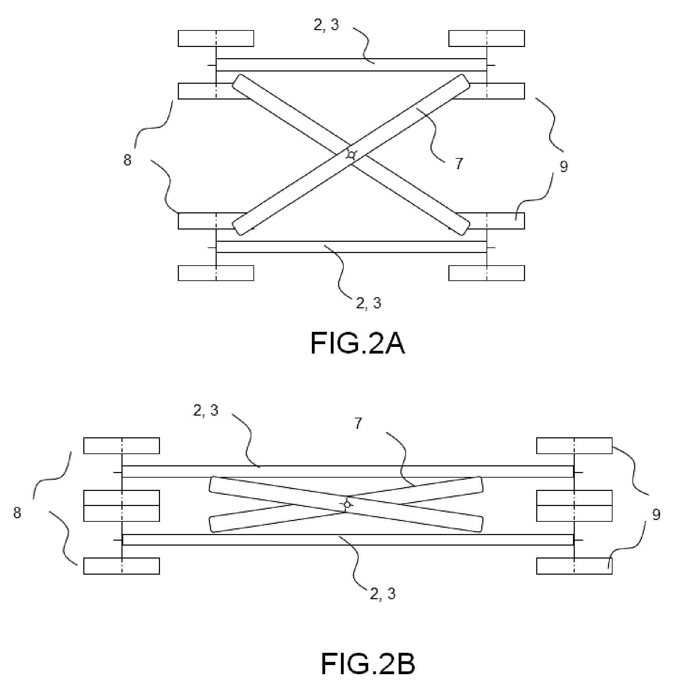

La figure 2A représente la poussette 1, en vue de dessus, dans une configuration non pliée. Le premier dispositif de pliage 7 forme une croix pliable, notamment autour d'un axe de rotation central. L'armature en vue de dessus dessine dans le plan de coupe des tiges 2, 3.
La figure 2B représente la poussette 1, en vue de dessus, dans une configuration pliée. La croix du premier dispositif de pliage 7 a subi un mouvement de rotation entrainant chaque côté de l'armature de guidage repliée l'un vers l'autre de manière à réduire l'encombrement de la largeur de la poussette.

La réduction en largeur est obtenue au moment du pliage par la fermeture partielle d'un système en croix placé horizontalement.

Ces mécanismes sont éprouvés et produits à des quantités industrielles. Le pliage obtenu est généralement compact. Cependant il conduit à notre connaissance à certains inconvénients parmi lesquels on trouve :
- La seule capacité à gérer des positions finales pliées-dépliées, sans offrir des positions intermédiaires qui seraient intéressantes dans des circonstances d'exigüité : manoeuvrer la poussette dans un ascenseur, dans un couloir d'avion, au milieu d'une foule.
- Pour certains modèles, le manque de facilité et d'ergonomie de pliage notamment en autorisant si besoin à pouvoir plier/ déplier en gardant les roues au contact du sol sans être obligé de soulever a minima la paire de roues avant ou arrière. Ou encore à être à être obligé de porter à bout de bras la poussette. Ceci à condition que la poussette soit très légère, ce qui n'est pas le cas des poussettes doubles et des landaus.
- la compacité obtenue n'est généralement pas optimisée.

Un inconvénient des solutions existantes est qu'il reste néanmoins un encombrement important de la poussette pliée notamment dans la hauteur et la longueur de cette dernière.

En effet, la cinématique de pliage qui impose un encombrement en longueur plus important en position pliée qu'en position dépliée. Cette augmentation est due à la fois à la fermeture du dispositif en croix dans le plan horizontal, aux mouvements du repliement de l'armature de guidage dans le plan horizontal et à l'encombrement des roues.

Le document WO2010000987 A1 décrit quant à lui une structure portant pliable selon le préambule de la revendication 1.

### RESUME DE L'INVENTION

L'invention permet de résoudre les inconvénients précités.

L'objet de l'invention concerne une structure portante pliable selon la revendication 1.

Selon un mode de réalisation, le système central pliable est une croix centrale. Lorsqu'il s'agit d'une croix centrale les points de fixation de la croix C et D d'un côté et les points associés aux points C et D du second coté sont intéressants pour obtenir un ratio donné de pliage entre la largeur et la longueur de la croix.

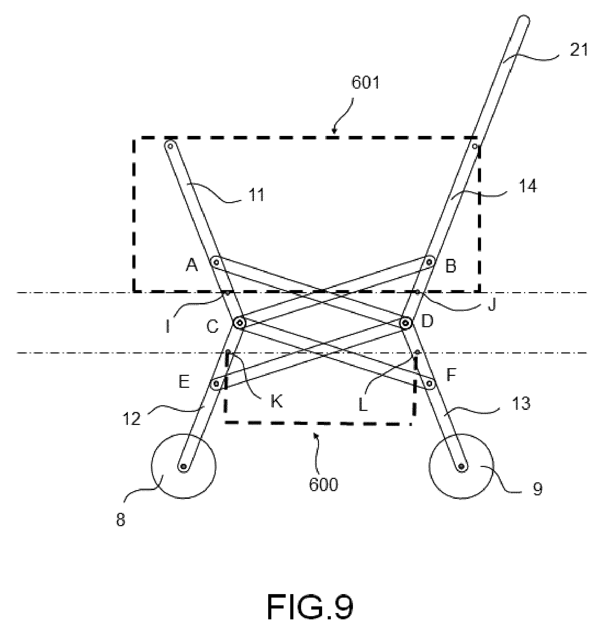

Lorsque le système central de pliage est un autre dispositif, un autre ratio de pliage entre la longueur et la largeur du système central de pliage peut être défini. Dans ce dernier cas des points C' et D' peuvent être définis sur les bras supérieurs par exemple, typiquement entre d'une part le point C et le point I et d'autre part entre le point D et le point J d'autre part, les points I et J étant représentés sur la figure 9.

De manière analogue, des points C" et D" peuvent être définis sur les bras inférieurs pour fixer le système central de pliage, par exemple, typiquement entre d'une part le point C et le point K et d'autre part entre le point D et le point L d'autre part, les points K et L étant représentés sur la figure 9.

Un avantage est de permettre une réduction de l'empattement de la structure portante, c'est-à-dire une diminution de la distance entre les points de contacts avant et les points de contacts arrière de la structure. En effet généralement, les pliages tels que ceux observés dans les structures de type poussette rallonge la longueur de la poussette.

Un autre avantage est que la structure peut être facilement intégrable dans de nombreux modes de fonctionnement étant donné que de simples liaisons pivots peuvent être fixées aux extrémités de la structure portante.

Avantageusement, chaque point d'appui est situé sur une roue, ladite structure comprenant :
- un premier ensemble de roues avant et un second ensemble de roues arrière ;
- des supports de roues comprenant des bras inférieurs avant et des bras inférieurs arrière comprenant chacun respectivement une première extrémité permettant de relier les axes de rotation des roues avec la structure portante.

Un avantage de ce mode de réalisation est de permettre une économie de place en rabattant les roues vers l'intérieur de la structure portante. Un gain de compacité est atteint pour permettre par exemple de ranger une structure de type poussette dans le casier passager d'un avion.

Avantageusement, chacune des roues arrière est située respectivement dans le même axe longitudinal que chaque roue avant, une roue avant et une roue arrière formant les roues d'un premier côté et respectivement les roues d'un second côté de la structure.

Dans une alternative un léger décalage d'axe entre une roue arrière et une roue d'un même coté permet un pliage sans gêne des roues d'un même coté.

La structure selon l'invention est particulièrement avantageuse pour les structures symétriques de part et d'autres de chacun de ses cotés. Les deux dispositifs de pliages latéraux peuvent être par exemple synchronisés au moyen d'une croix de type Mac Laren dans un plan horizontal. Les liaisons aux extrémités de la croix de type Mac Laren et aux extrémités inférieurs des antiparallélogrammes de la structure peuvent être fixes.

Avantageusement, la première, la seconde, la troisième, la quatrième et la cinquième fixation sont des liaisons pivot.

Ces liaisons permettent une grande manoeuvrabilité tout en étant compatible de dispositif de serrage, de blocage ou de rigidification. En outre toutes les liaisons pivots entrainent une interdépendance de mouvement permettant de synchroniser les pliages avant et arrière. Ils sont de plus compatibles de mécanismes de propagation des mouvements de pliages vers un autre dispositif de pliage.

Avantageusement, le bras inférieur avant de chaque côté de la structure effectue un premier mouvement de rotation autour de la première extrémité de l'antiparallélogramme lors du passage de la première position à la seconde position et inversement.

Avantageusement, le bras inférieur arrière et le bras supérieur arrière de chaque côté de la structure effectue un second mouvement de rotation autour de la quatrième extrémité (F) de l'antiparallélogramme lors du passage de la première position à la seconde position et inversement.

Avantageusement, le triangle formé par la première extrémité de l'antiparallélogramme, la quatrième extrémité de l'antiparallélogramme et le point supérieur, est un triangle isocèle de sommet la première extrémité de l'antiparallélogramme, le triangle restant isocèle dans toutes les positions de pliage.

Avantageusement, le dispositif de pliage comprend un premier dispositif de synchronisation du premier et du second mouvement de rotation.

Avantageusement, le premier dispositif de synchronisation du premier et du second mouvement de rotation est réalisé au moyen de la barre latérale.

Avantageusement, la structure portante comprend un dispositif de synchronisation de pliages des deux dispositifs de pliage.

Avantageusement, le dispositif de pliage comprend un bras supérieur avant et une seconde barre latérale, ladite seconde barre latérale:
∘ étant fixée au moyen d'une septième fixation par une première extrémité de ladite seconde barre latérale à la première extrémité du bras inférieur arrière ;
∘ étant fixée au moyen d'une huitième fixation au bras supérieur avant en une second point supérieur de telle sorte que la longueur de la première barre latérale est sensiblement proche du second segment formé par la première et la quatrième extrémités de l'antiparallélogramme et sensiblement parallèle audit second segment.

Avantageusement, les deux secondes barres latérales forment un antiparallélogramme, les septième et huitième fixations étant des liaisons pivot.

Avantageusement, la structure comprend une armature de guidage permettant de guider la structure portante lorsque les roues sont dans la première position.

Avantageusement, l'armature de guidage comprend des moyens pour guider la structure portante et un dispositif de rigidification pliable permettant d'une part le maintien des bras supérieurs arrière à une distance maximale prédéfinie et d'autre part de réduire l'écartement des bras supérieurs arrière lorsqu'un second pliage est réalisé.

Avantageusement, le dispositif de rigidification permet de maintenir les bras arrière et les points d'appuis arrière dans un même plan.

Avantageusement, le dispositif de rigidification est fixé aux bras supérieurs arrière de la structure et comprennent huit liaisons fixées par des liaisons pivot comprenant une première paire de quadrilatères isocèles de même dimensions et une seconde paire de quadrilatères isocèles de même dimensions, chacun des quadrilatère ayant une longueur du petit côté sensiblement voisine de la longueur du grand coté les quadrilatère de la première paire étant une homothétie des quadrilatères de la seconde paire, les huit liaisons comportant une position de blocage permettant de maintenir les bras arrière à une position d'écartement maximal.

Avantageusement, le dispositif de rigidification comprend une pluralité d'ensemble de tiges fixées par des liaisons pivots entre elles et par des liaisons pivots au bras supérieurs arrière, lesdits ensembles de tiges étant reliés par au moins un antiparallélogramme permettant de synchroniser les pliage de chaque ensemble de tiges.

Avantageusement, le dispositif de rigidification comprend une barre coulissante et un ensemble de tiges permettant de maintenir la barre coulissante et entre les bras arrière, lesdites tiges étant maintenues aux bras supérieurs arrière par des liaisons pivot, un premier ensemble de tiges étant relié à la barre coulissante par une liaison glissière et pivot et un second ensemble de tiges étant relié à la barres coulissantes par une liaison pivot.

Avantageusement, les moyens de propagation permettent la synchronisation du pliage d'au moins un dispositif de pliage avec le pliage du dispositif de rigidification de manière ce qu'un pliage du dispositif de rigidification entraine le pliage d'au moins dispositif de pliage.

Avantageusement, le dispositif de rigidification pliable comprend un moteur permettant d'actionner un pliage et/ou un dépliage permettant de réduire ou augmenter l'écartement des bras supérieurs arrières.

Un autre objet de l'invention concerne une poussette comportant une structure portante conformément à l'invention.

Un autre objet concerne un Landau comportant une structure portante conformément à l'invention comportant deux bras supérieurs avant et deux secondes barres latérales associées reliant les bras supérieurs avant à la structure portante. Les secondes barres latérales étant symétriques aux premières barres latérales.

### BREVES DESCRIPTION DES FIGURES

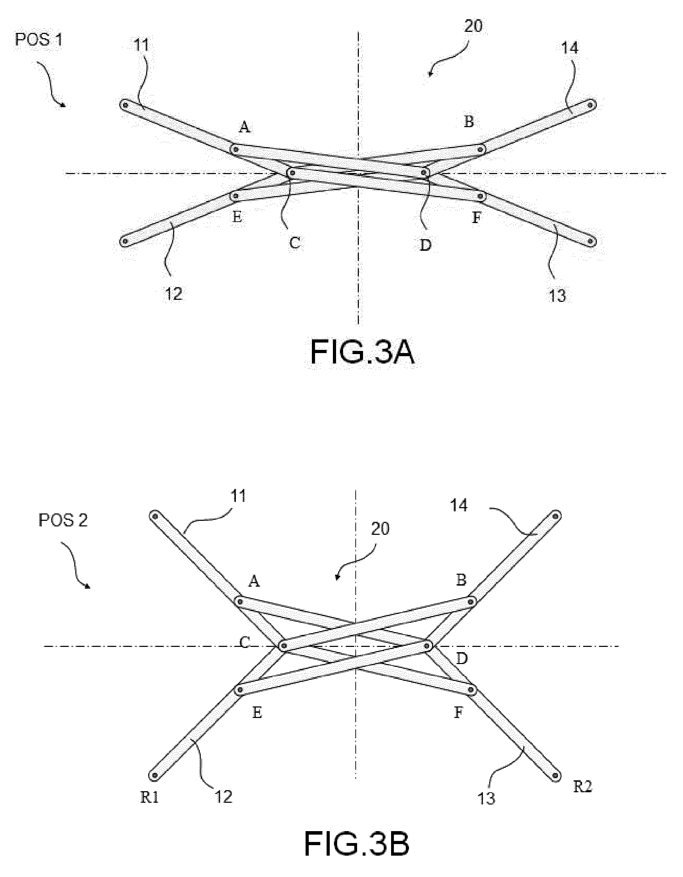

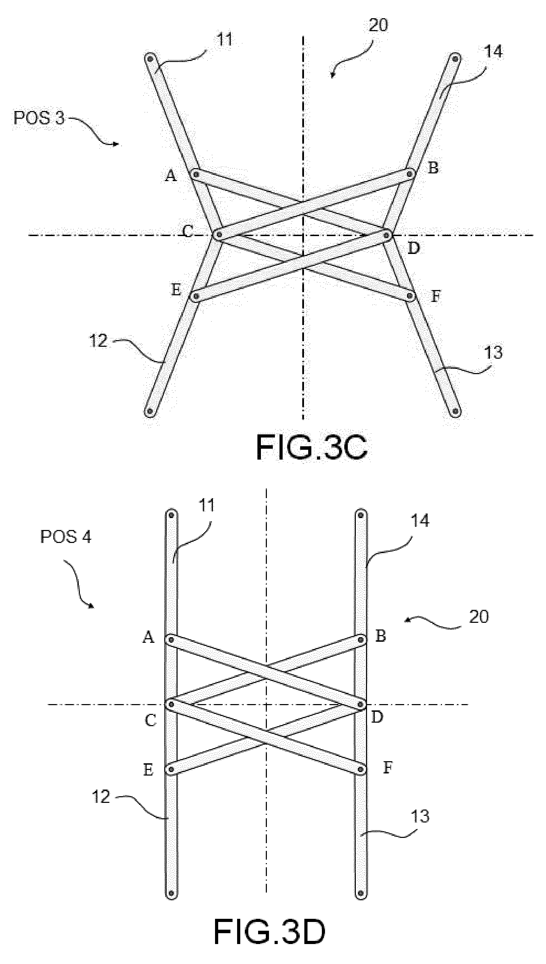

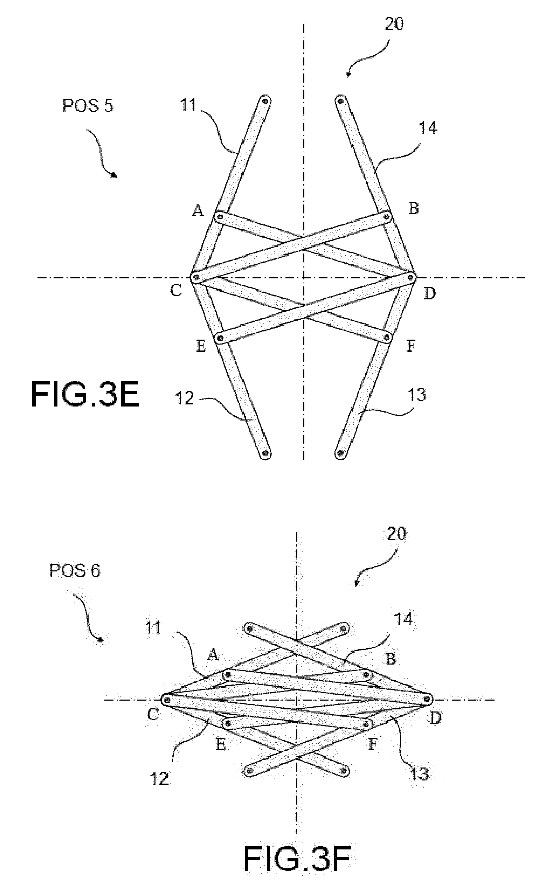

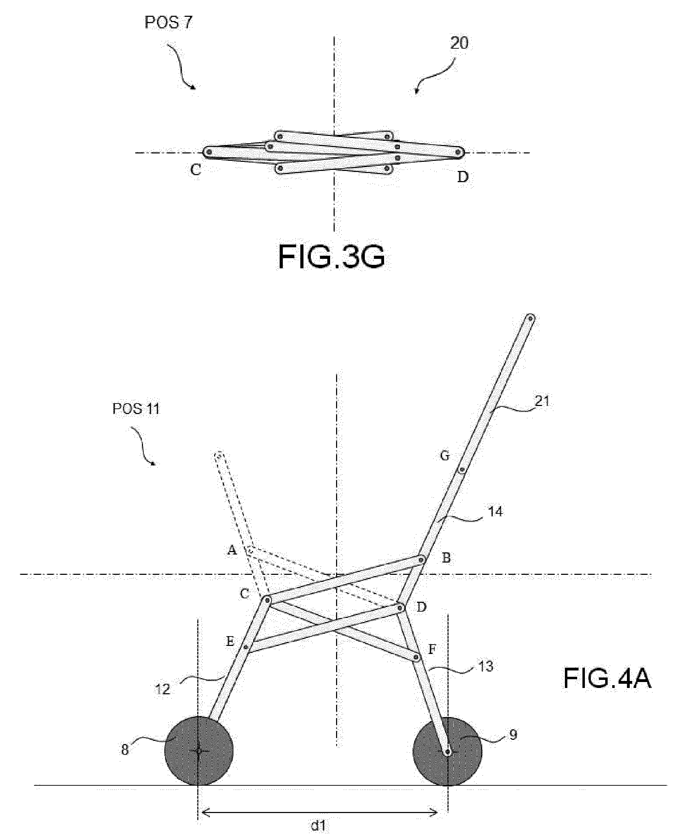

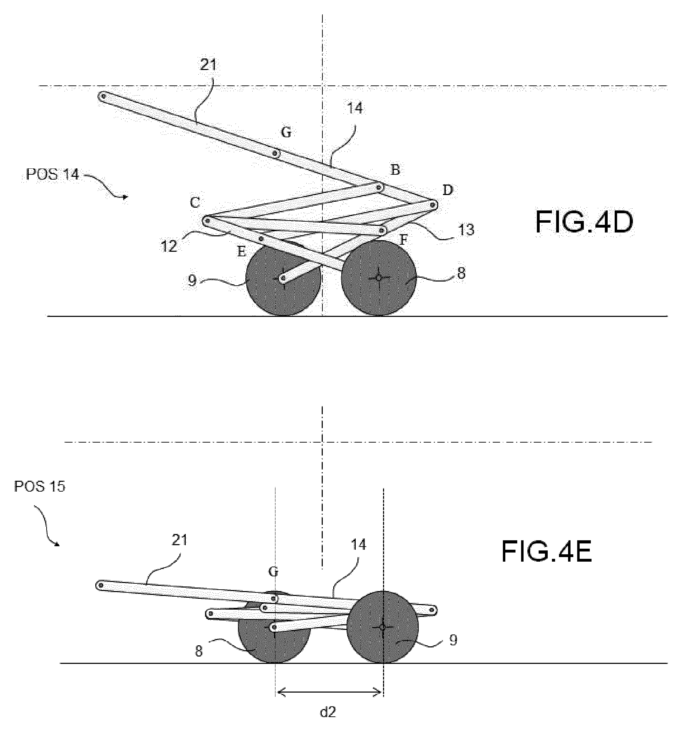

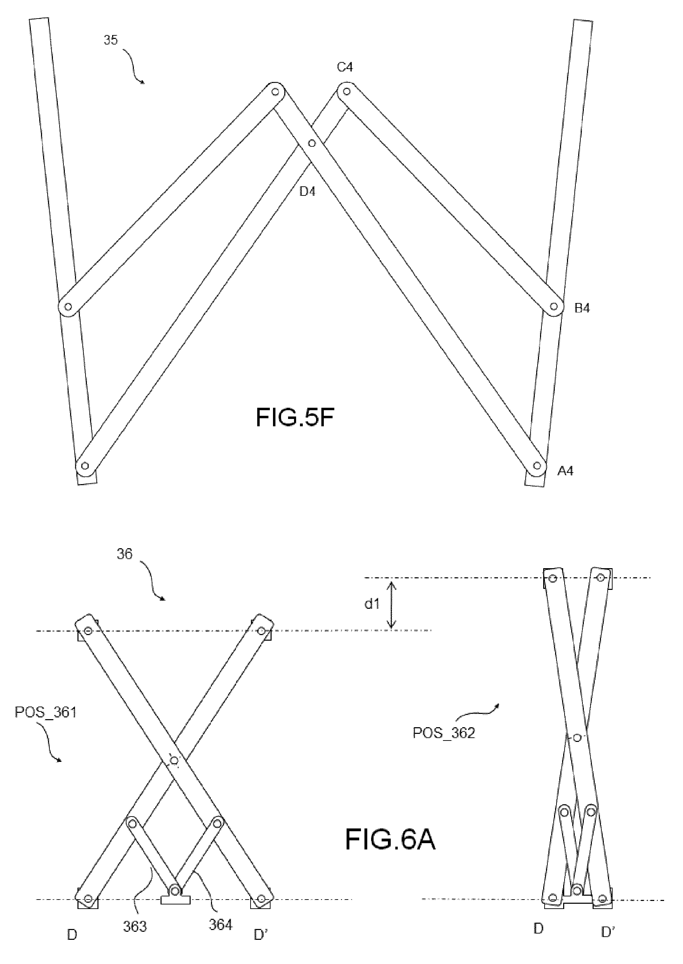

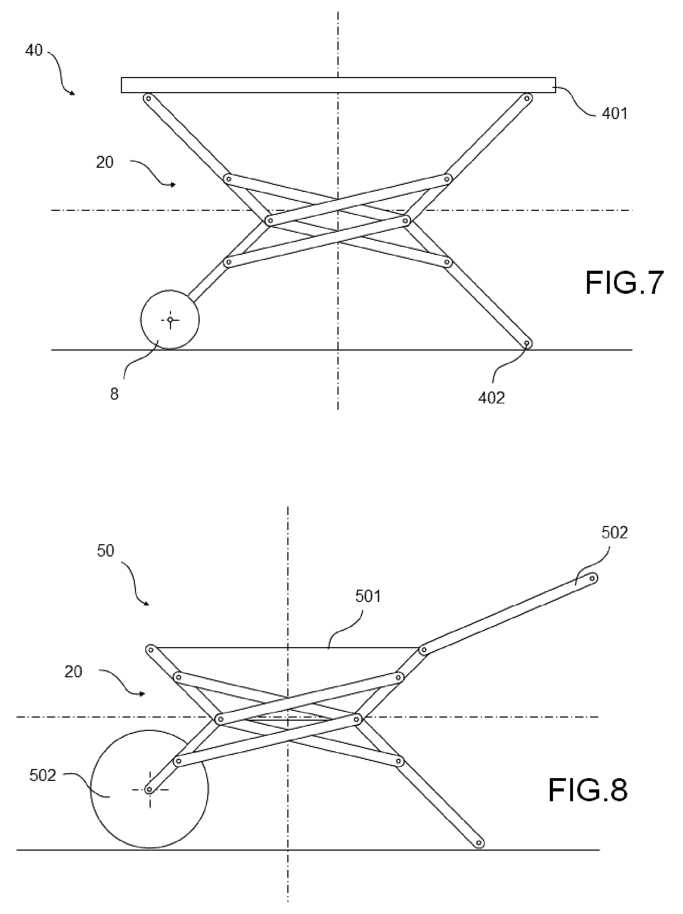

D'autres caractéristiques et avantages de l'invention ressortiront à la lecture de la description détaillée qui suit, en référence aux figures annexées, qui illustrent :
▪ figure 1A, 1B, 2A, 2B : différentes vues d'une poussette pliable de l'art antérieur ;
▪ figure 3A à 3G : différentes positions de pliages du dispositif de pliage d'une structure portante de l'invention ;
▪ figure 4A à 4G : différentes positions de pliages d'une structure portante de l'invention telle qu'une poussette ;

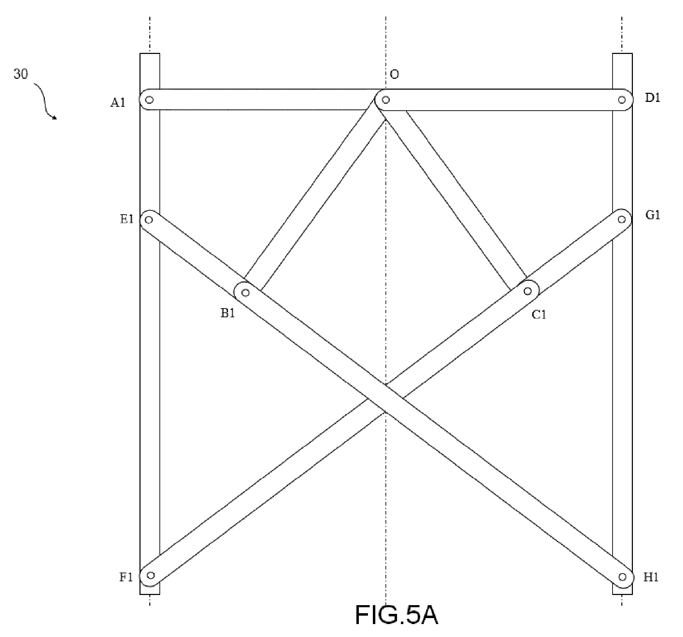

   figure 5A à 5F : différents dispositifs de rigidification de l'invention compatibles de la structure de l'invention ;
▪ figure 6A à 6D : différents dispositifs de propagation permettant de synchroniser les pliages d'un dispositif de rigidification avec un dispositif de pliage central compatibles de la structure de l'invention ;
▪ figure 7 : une table pliable comprenant une structure portante de l'invention ;
▪ figure 8 : une brouette pliable comprenant une structure portante de l'invention ;
▪ figure 9 : un chariot pliable comprenant une structure portante de l'invention.

### DESCRIPTION

### Définitions

On entend dans la suite de la description par « empattement », la distance séparant l'axe reliant les points d'appuis avant et l'axe reliant les points d'appuis arrière d'une structure sans roue.

L'empattement désigne conventionnellement la distance séparant l'axe reliant les roues avant et l'axe reliant les roues arrière d'une structure comprenant aux moins deux roues avant et deux roues arrière.

Dans le cas d'une structure comportant qu'une seule roue avant, l'empattement désigne la distance entre l'axe de la roue avant et l'axe des roues arrière (comportant le même axe).

On entend dans la suite de la description par « une structure antiparallélogramme », une structure formant effectivement un antiparallélogramme c'est-à-dire un quadrilatère croisé dont les côtés non adjacents sont de même longueur formant à l'intérieur une croix pliable.

En outre, un antiparallélogramme comprend différentes propriétés dont : les angles opposés de la structure formant la croix ont la même mesure. Dans un antiparallélogramme, les diagonales sont parallèles et il admet un axe de symétrie qui est la médiatrice des diagonales. Il est également à noter qu'un antiparallélogramme est inscriptible dans un cercle et que deux côtés opposés ont leur point d'intersection situé sur cette médiatrice.

Une poussette Canne désigne une poussette comprenant un pliage en trois dimensions, lui permettant de se rétracter en longueur puis en largeur. Elle est aussi appelée "poussette parapluie".

On désigne par « croix Mac Laren », la croix pliable du nom de son inventeur composée de deux segments reliés par un pivot commun placé au milieu des deux segments et donc au centre de la croix utilisé dans une poussette Canne pour réaliser un pliage dans un plan a minima horizontal. Les pliages sont synchronisés par l'emploi d'une structure de propagation permettant sous l'action du pliage de la première croix horizontale, le pliage d'une seconde croix verticale ou d'un système de rigidification.

La figure 3A illustre le principe de fonctionnement d'un dispositif de pliage pour une structure portante conformément à l'invention. Ce dispositif est disposé sur un coté de la structure. La structure comprend donc deux dispositifs de pliage. Les figures 3A à 3G ne représentent qu'un seul dispositif de pliage.

Afin d'illustrer au mieux les mouvements de rotation, les symétries et le pliage du dispositif, les figures 3A à 3G représentent également un bras 11 et une barre latérale AD non nécessaires dans un mode principal de réalisation de l'invention dans lequel la structure de l'invention est une poussette par exemple. Ils sont uniquement représentés afin de mieux comprendre l'invention sans imposer de restriction au dispositif de pliage et à la structure portante de l'invention. Néanmoins, dans un mode de réalisation tel qu'un un landau, le bras 11 et la barre latérale AD peuvent être présents afin de réaliser une structure portante symétrique offrant par exemple une surface sensiblement plane porteuse.

Les figures 3A à 3G représentent différentes positions relatives à différents pliages POS_1, POS_1, POS_2, POS_3, POS_4, POS_5, POS_6, POS_7 d'un dispositif de pliage destiné à être agencé au niveau d'un côté d'une structure portante conformément à l'invention.

Selon un mode de réalisation, des bras inférieurs avant 12 et des bras inférieurs arrière 13 du dispositif de pliage permettent d'être fixés à des supports de roues sensiblement en leur centre de rotation, c'est à dire aux points R1 et R2 représentés aux figures 3A à 3F.

Des bras supérieurs arrière 14 permettent de fixer chaque dispositif de pliage agencé d'un côté de la structure portante à une armature de guidage permettant de guider la structure portante lorsque des roues sont fixées aux extrémités inférieures des bras inférieurs.

Lorsque le dispositif de pliage est utilisé avec une structure portante telle qu'une poussette, le bras supérieur 11 n'a pas vocation, ainsi que la barre latérale AD, à demeurer dans le dispositif de pliage, il n'est présent que pour illustrer une certaine symétrie possible du dispositif de pliage.

Le dispositif de pliage 20 de la structure portante de l'invention comprend un antiparallélogramme CDEF formant une structure en croix de tel sorte que le triangle BCF reste isocèle quelque soit le pliage ou la position du dispositif.

Le dispositif de pliage comprend des bras inférieurs 12, 13 fixés à aux extrémités C, D, E, F de l'antiparallélogramme CDEF par des liaisons pivots. Les bras 12, 13 tournent chacun autour d'un centre de rotation C en leur extrémité supérieure, respectivement D. Les extrémités supérieures des bras inférieurs sont fixées à deux extrémités de l'antiparallélogramme CDEF.

Les figures 3A à 3G représentent différentes positions lors d'un mouvement de rotation du dispositif de pliage autour des centres C et D.

En outre, une barre latérale CB est agencée de telle sorte qu'elle soit fixée à une extrémité C de l'antiparallélogramme CDEF qui correspond également à l'extrémité du bras inférieur avant 12. La liaison entre le bras latérale CB et le bras 12 est assurée par une liaison pivot.

Selon un mode de réalisation, l'extrémité supérieures de la barre latérale est fixée au bras supérieur arrière 14 en un point B de telle sorte que le triangle BCF soit isocèle quelle que soit la position de pliage et de telle sorte que les segments ED et CB soient parallèles quelque soit la position de pliage du dispositif de pliage 20.

Grâce à l'antiparallélogramme CDEF et à la barre latérale CB, les rotations autour des centre C et D sont synchronisées.

Les liaisons pivots peuvent comprendre des échancrures dans les barres de liaisons pour le passage des pivots et/ou galber leur profil et/ou ajouter des profils en U. Cette solution permet de diminuer voire supprimer les problématiques d'interférence avec les axes de pivotement.

Afin de mieux comprendre, le mouvement de pliage, considérons un dispositif de pliage 20 de la structure de l'invention auquel on ajoute un bras supérieur avant 11 et la barre latérale AD qui joint d'une part l'extrémité D et un point du bras supérieur avant 11. Le dispositif de pliage 20 comprend alors quatre bras articulés 11, 12, 13, 14 sur un point de rotation commun : C ou D par côté. En considérant le bras supérieur avant 11 et la barre latérale AD, les bras sont reliés par deux paires de liaisons croisées qui forment avec les segments de bras deux antiparallélogramme ABCD et CDEF. Du fait de la symétrie de l'antiparallélogramme, les angles du dispositif sont identiques de chaque côté et va être un moyen de synchroniser parfaitement la rotation de chacun des bras de chaque côté.

Les deux antiparallélogrammes ABCD et CDEF sont identiques, ce qui conduit à ce que les triangles ADE et BCF sont isocèles et garantissent la symétrie également entre la partie supérieure et la partie inférieure du dispositif de pliage 20.

Le dispositif de pliage reste symétrique par rapport à l'axe vertical, à l'axe horizontal ou au centre où se croisent les deux axes. Ces contraintes imposent une synchronisation des pliages du dispositif de pliage.

La figure 3G représente un dispositif de pliage dans sa position pliée la plus compacte dans laquelle la longueur maximale du dispositif est définie par le segment CD.

La figure 4A représente un exemple de structure portante telle qu'une poussette. Cette dernière ne comprend pas le bras supérieur 11 et la barre latérale AD.

Dans ce mode de réalisation de l'invention de structure portante, une armature de guidage 21 permet de guider la structure portante lorsque les roues sont dans la première position. L'armature de guidage peut comprendre des bras supérieurs 21 et des poignées ou encore un arceau ou au moins une tige ayant une forme adaptée pour pousser et guider la structure lorsqu'elle roule.

L'armature de guidage est dans un mode de réalisation fixée au bras supérieurs d'au moins un dispositif de pliage au moyen d'une liaison pivot G. l'armature est préférentiellement fixée de part et d'autre de la poussette sur chaque côté au niveau de chacun des dispositifs de pliage 20.

D'autres modes de réalisation sont possibles. Notamment, le bras supérieur arrière peut être prolongé par une partie fixe qui en bout se termine en poignée. Il peut être télescopique ce qui permet de régler la longueur des bras et donc la position des poignées. Il peut être également prolongé par une partie articulée autour d'un point de rotation, commandable indépendamment.

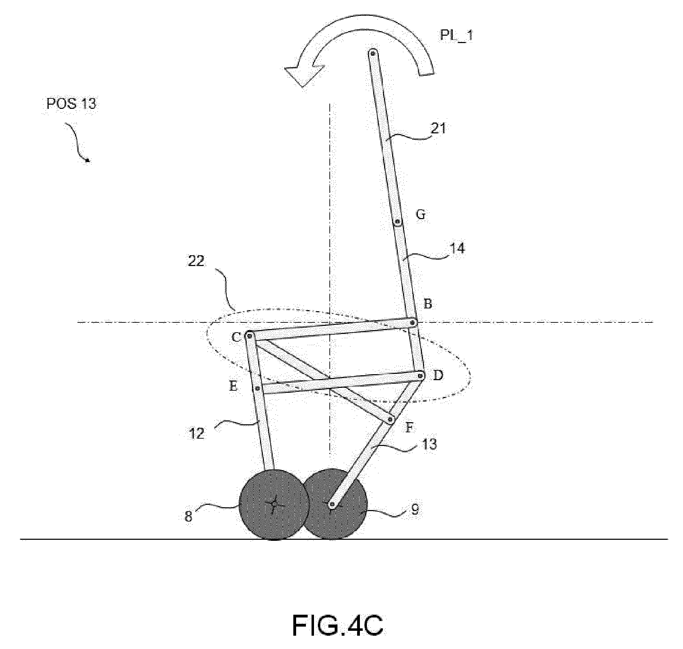

Les figures 4A à 4G représentent différentes positions de pliage POS_10, POS_11, POS_12, POS_13, POS_14, POS_15, POS_16, POS_17 de la poussette notamment lorsqu'un premier pliage noté PL1 est initié. Le pliage PL_1, représenté à la figure 4C, peut être effectué à partir d'un mouvement de l'armature de guidage vers l'avant de la structure définissant une rotation par rapport au point D qui est le sommet supérieur arrière de l'antiparallélogramme CDEF.

L'armature de guidage 21 et le bras arrière 14 bascule selon une rotation vers l'avant de la structure selon un pliage PL_1. Les pliages étant synchronisés grâce au dispositif de pliage 20 de part et d'autre de la poussette autour des centres de rotation C et D.

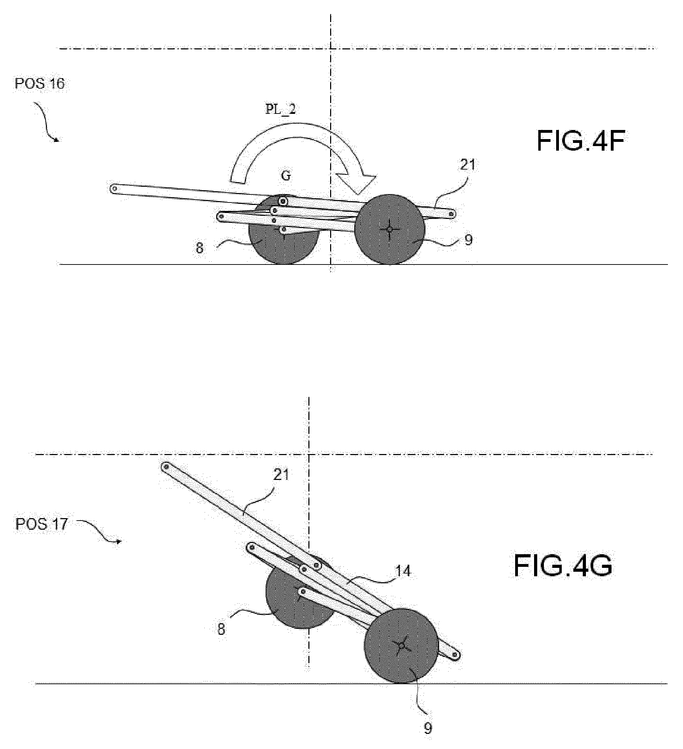

La figure 4F représente un second mouvement de pliage lorsque le point de jonction entre les bras supérieurs arrière 14 et l'armature 21 est une liaison pivot autour d'un point de fixation G. La figure 4F représente un mode de réalisation dans lequel un pliage PL_2 permet de rabattre l'armature de guidage 21 sensiblement en superposition des bras arrière supérieurs qui sont repliés. Le rabattement de l'armature de guidage s'effectue dans un mouvement de pliage inverse au mouvement de pliage PL_1 de la structure.

La figure 4F et 4G représentent une structure portante pliée dans sa position la plus compacte.

La figure 4A représente un empattement d1, correspondant à la distance entre les roues avant et les roues arrière dans la première position dite de dépliage.

La figure 4E représente un empattement d2 réduit après pliage, correspondant à la distance entre les roues avant et les roues arrière dans la seconde position dite de pliage.

La figure 4G représente un mode dans lequel la poussette qui est pliée peut être tirée comme une valise à roulettes. Dans ce mode l'armature de guidage a une seconde fonction qui est de permettre de tirer la poussette en la faisant rouler pour être transportée.

Dans un mode de réalisation simple, les bras inférieurs avant et arrière sont rattachés deux roues. Dans un mode simple, les roues arrière sont fixes et les roues avant sont pivotantes.

Dans une variante de réalisation, la poussette comprend des moyens de maintien pour bloquer les roues dans l'axe longitudinal de la poussette, c'est à dire une direction s'étendant dans la longueur de cette dernière.

Dans une variante de réalisation, la première position de dépliage est légèrement inclinée comme représenté par exemple à la figure 4A permettant d'offrir un confort pour le guidage de la poussette tout en permettant une inclinaison adaptée de la structure destinée à porter un bébé.

Dans une variante, des moyens de réglage permettent de choisir et de fixer l'orientation de la poussette, notamment de l'inclinaison des bras arrière et de l'armature de guidage.

Dans une variante, la poussette peut être également dimensionnée de manière à être légèrement inclinée pour permettre de surélever légèrement la partie avant de la poussette. Pour cela il est possible de choisir un bras inférieur avant légèrement plus long que le bras inférieur arrière, par exemple de quelques centimètres.

Dans ce dispositif, le bras supérieur arrière est le levier de commande du dispositif à travers son inclinaison. Il faut donc que l'angle de rotation soit potentiellement réglable en plus des positions de sécurité plié/déplié pour bénéficier de fonctions supplémentaires. Selon les modes de réalisation, le verrouillage de l'inclinaison se fait soit latéralement sous forme de poussoir accessible de chaque côté, soit par une commande déportée positionnée en partie supérieure.

Un des avantages du dispositif de l'invention est qu'il présente la caractéristique d'un système haptique qui procure à l'utilisateur un retour d'effort pendant les manoeuvres de pliage/dépliage ou de modification d'empattement:
- en effet, les modes de fonctionnements de la cinématique sont tels que l'utilisateur provoque le pliage/dépliage en manipulant les bras arrière à travers une force et un couple de rotation obtenus de ses propres mains ;
- en retour, il ressent en contre-réaction les forces opposées et les couples résistants transmis via la structure de pliage par antiparallélogramme issus des points d'appuis des bras inférieurs avant et/ou arrière à sa convenance, en contact avec le sol ;
- de ce fait, il est en mesure d'effectuer de façon maîtrisée le pliage et/ou le dépliage, si besoin en contrôlant la rotation au degré près, ce qui est un grand avantage en termes d'ergonomie et de sentiment de sécurité vis-à-vis d'un pliage ou dépliage intempestif.

En conséquence, les points d'appuis contribuent à faciliter le pliage dans la mesure où le contre effort produit par la résistance du sol contribue au mouvement de rotation du ou des dispositif(s) de pliages latéraux après l'initiation d'un effort exercé sur les bras arrières.

Plus spécifiquement, dans un mode de réalisation amélioré, les roues arrière et avant ne sont pas positionnées dans le même plan longitudinal pour pouvoir se croiser au moment du pliage de chaque côté.

Enfin, il est possible d'ajouter sur chaque côté de la poussette un compas pliant, par exemple comme celui de la figure 1, entre un point avant, de préférence l'axe de rotation C, et le bras supérieur arrière :
- pour assurer le blocage en angle ouvert
- pour retrouver la disposition usuelle des poussettes soit au titre fonctionnel pour fixer des interfaces qui permettent d'échanger sur la poussette différentes configurations comme c'est déjà le cas des versions « trio », soit au titre esthétique.

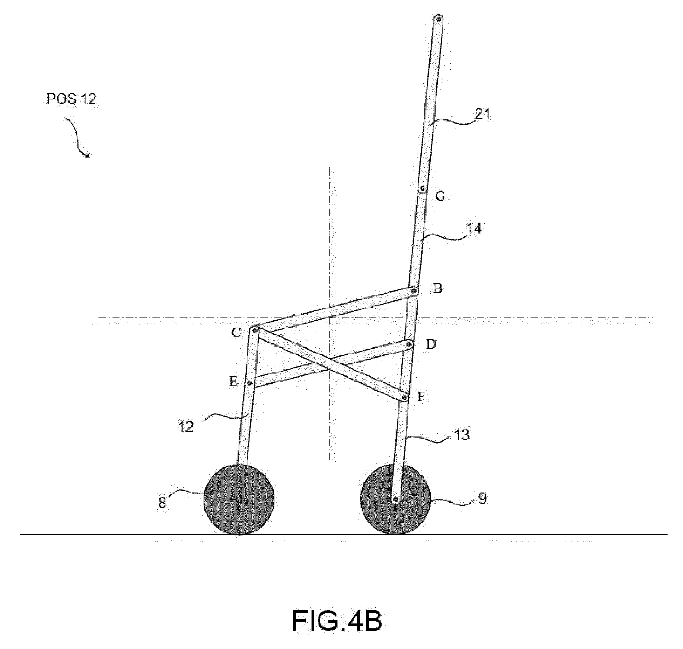

La figure 4B représente une position de pliage de la poussette sensiblement verticale. Cette position permet de surélever la poussette et de réduire l'empattement entre les roues avant et arrière. Il peut s'agir d'une position intermédiaire qui peut être utilisée dans certaines configurations dans lesquelles la manoeuvrabilité de la poussette est augmentée. Cette situation adaptée à des manoeuvres dans un espace réduit, tel qu'un ascenseur, un couloir d'avion ou encore en présence d'une foule.

Pour des raisons de sécurité cette fonctionnalité peut être associée à la nécessité pour l'utilisateur de maintenir un poussoir appuyé (à l'instar de certains chariots).

Avantageusement, le pliage de la poussette peut être effectué en laissant les roues au sol facilitant le premier mouvement de pliage PL_1.

La structure de l'invention est compatible avec d'autres systèmes tels que les poussettes comprenant au moins une croix centrale de type Mac Laren pour le pliage de la poussette. Pour mettre en oeuvre un pliage latéral lorsqu'on incline vers l'avant le plan des bras arrière, il est possible d'implémenter une croix positionnée dans la zone 22 de la figure 4C entre le point C et le point D, respectivement sur chaque côté de la poussette. Dans la cinématique de pliage, les centres de rotation C et D sont en phase d'éloignement et donc induisent une extension de la croix, de type Mac Laren. Par conséquent, le rapprochement des deux côtés est possible avec l'utilisation d'une croix centrale.

Un avantage est de pouvoir rendre des poussettes existantes compatibles du dispositif de pliage conformément à l'invention.

Un mode de réalisation consiste à adjoindre une croix de type Mac Laren fixée à proximité des points C et D correspondant aux extrémités supérieurs de l'antiparallélogramme CDEF d'un côté et leur homologues d'un dispositif de pliage situé sur l'autre côté de la structure. De manière à fixer une croix Mac Laren, des pièces d'interface peuvent être utilisées de type équerre ou « U » pivotants.

En termes de dimensionnement, lorsqu'une croix, Mac Laren est adjointe à la structure portante de l'invention, certaines caractéristiques structurelles peuvent être adaptées, dont notamment :
- la largeur de la structure portante en position ouverte et en position fermée ;
- la longueur de la croix ouverte et fermée, et l'écart entre les deux longueurs ;
- l'angle d'inclinaison maximal correspondant à la position ouverte ;
- la longueur des plus grands côtés des antiparallélogrammes ABCD et CDEF avec CF=CB=DE longueur de la liaison par antiparallélogramme ;
- la dimension des tiges BD= DF=EC correspondant à la largeur de la liaison par antiparallélogramme
- la dimension CD en position ouverte et fermée et l'écart entre les deux dimensions calculées, conséquence des trois variables précédentes.

De manière, à améliorer la structure portante de l'invention comportant une croix Mac Laren, il est nécessaire de choisir préférentiellement un écart de dimension CD en position ouverte et fermée correspondant à l'écart de longueur entre la croix Mac Laren ouverte et fermée.

Un exemple de réalisation de l'invention peut être fait en choisissant une dimension CF de l'ordre de 30 cm à 15% près, une dimension BD de l'ordre de 10 cm à 15% près et une diagonale de la croix de l'ordre de 40 cm à 15% près.

Ces dimensions exactes mentionnées sont idéales pour la réalisation d'une poussette, les marges permettent néanmoins d'obtenir des variantes de réalisations satisfaisantes.

La structure portante de l'invention peut comprendre dans des variantes de réalisations un dispositif de rigidification disposé préférentiellement à l'arrière de la structure portante entre les bras arrière.

Ils ont pour fonction principal de suppléer ou de renforcer la rigidité des liaisons pivots des bras arrière. Ce dispositif de rigidification permet de maintenir les paires de bras parallèles à une distance maximale constante lorsque la structure est maintenue dépliée.

Le dispositif de rigidification permet également de contribuer au pliage de la structure portante car il comprend un second dispositif de pliage permettant de rendre la structure plus compacte quand elle est pliée.

Ce dispositif permet d'accroitre un confort d'utilisation et de rendre le pliage de la structure plus simple. En outre il permet de maintenir la structure dans une position de pliage pour éviter des pliages indésirables.

Différentes variantes existent du dispositif de rigidification, ces dernières sont représentées aux figures 5A à 5F.

Un premier dispositif 30 est un système de huit liaisons uniquement à pivots de type celles conçues par Alfred Kempe, mathématiquement exacte. Il est structuré sous forme de deux paires de quadrilatères AOBE-OCGD et FAOC-HBOD isocèles dont le petit côté est le moitié du grand côté et homothétiques entre eux :
Les longueurs sont telles que :
   A1 E1=E1 B1=C1 G1=G1 D1=1 ;
   OA1=OB1=OC1=OD1=2 ;
   F1A1=F1C1=H1B1=H1D1=4 ;

De fait, en position ouverte, A1D1F1H1 est un carré ce qui en fait une solution spécifique.

Il est possible d'obtenir des solutions alternatives qui permettent d'obtenir des formes différentes du carré.

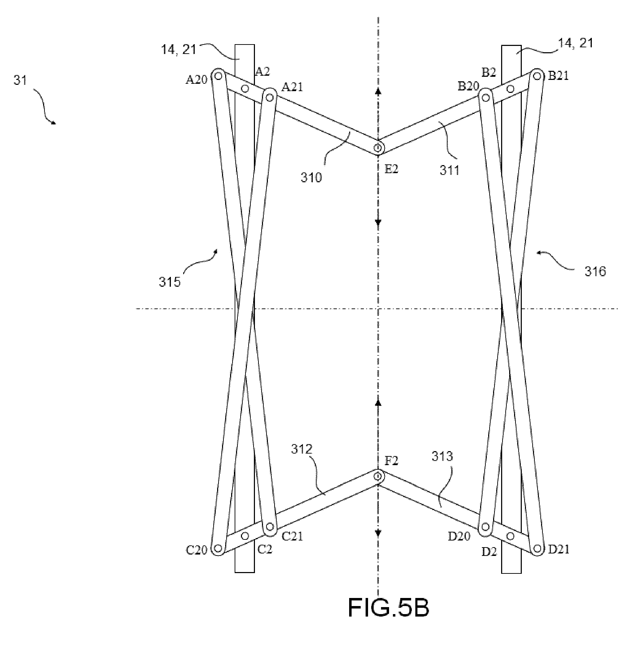

Par exemple, un dispositif de rigidification 31 peut comprendre des ensembles de tiges 310, 311, 312, 313 fixées aux bras supérieurs arrière 14, 21 par des liaisons pivots A2, B2, C2, D2. Le dispositif de rigidification peut se plier comme cela est représenté à la figure 5B, à l'intérieur du périmètre dudit dispositif de rigidification lorsqu'il est dans une position de pliage. Pour actionner le pliage du dispositif de rigidification, des liaisons pivots E2, F2 permettent aux bras supérieurs arrière de se rapprocher et de diminuer la largeur de la structure portante.

Afin de synchroniser les pliages du premier ensemble de tiges supérieures 310, 311 et du second ensemble de tiges 312, 313, des antiparallélogrammes 315 et 316 (notés par leurs extrémités A20A21C20C21 et B20B21 D20D21) peuvent être disposés de manière à relier les ensembles de tiges supérieures et inférieures.

Dans ce dispositif 31 les deux tiges 310, 311 qui forment un premier compas et les deux tiges 312 et 313 qui forment un second compas fonctionnent en opposition et sont synchronisés en rotation par les deux antiparallélogrammes 315 et 316. Les bras arrière 14 ou leur prolongement 21 dont le parallélisme est à synchroniser sont liés par des points de rotations milieux des petits côtés des antiparallélogrammes 315 et 316 ce qui est une approximation :
- Il s'agit de l'écart de longueur entre le grand côté de l'antiparallélogramme en position fermée et l'hypoténuse qui serait la longueur en position ouverte
- dans la figure 5B, chaque antiparallélogramme 315, 316 comprend des proportions d'un rapport environ de 1 à 7. Ces proportions permettent d'avoir un écart d'1% entre les deux valeurs; l'hypoténuse d'un triangle rectangle de base 1 et de hauteur 1/7 a pour longueur la racine carrée de 1+1/49 = 1 + 2% égal à 1 + 1 % fois la base.

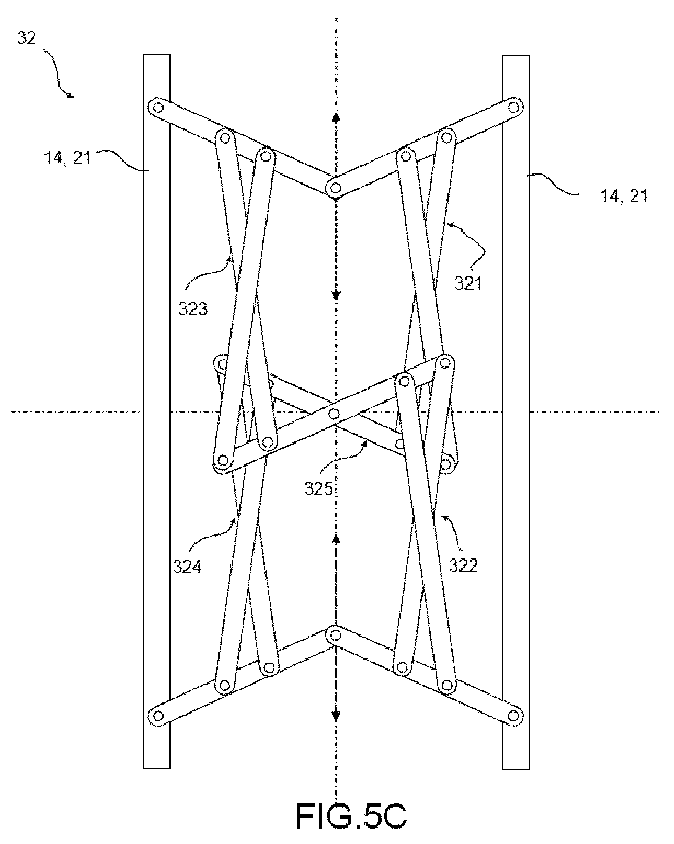

Une variante de réalisation de ce mode est représentée à la figure 5C dans laquelle un dispositif de rigidification 32 comprend quatre antiparallélogrammes 323, 324, 321, 322 sensiblement dans le plan formé par les bras supérieurs arrière 14 ou leur prolongement 21.

Il est possible de rendre le dispositif pliable strictement à l'intérieur du périmètre de la structure ouverte formé par le périmètre du dispositif de rigidification.

Ce mode de réalisation 32 comprend une croix centrale 325 dont les branches sont reliées par des antiparallélogrammes à l'échelle ½ des précédents, c'est-à-dire ceux de la figure 5C.

Cette croix assure la propagation de la synchronisation de la rotation de l'ensemble du dispositif de rigidification.

Dans un mode amélioré, il est préférable de conserver un écartement de quelques centimètres entre les liaisons de pliages.

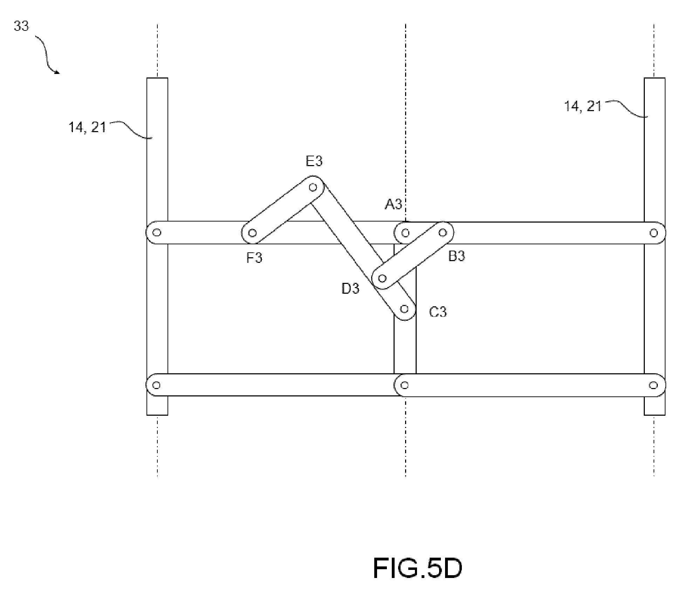

Un deuxième type de solution est représentée à la figure 5D. Elle comprend la combinaison de deux parallélogrammes déformables identiques dont il faut assurer une synchronisation du pliage/repliage. Une solution consiste à utiliser un « bisecteur » issu du « trisecteur » d'Alfred Kempe à base de deux antiparallélogrammes dont l'un A3C3E3F3 est le double de l'autre A3B3C3D3 :
A noter que les proportions sont les suivantes pour obtenir un pliage et un maintien de la structure convenable : A3B3=C3D3=1, A3B3=A3C3=E3F3=2, C3E3=4.

Ce dispositif à huit liaisons uniquement à base de pivots est également mathématiquement exact et peut fonctionner avec peu d'espace.

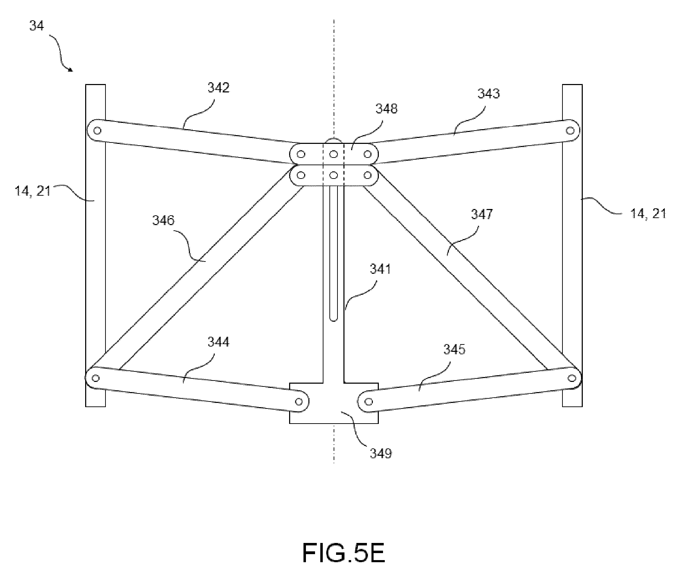

Dans un autre mode de réalisation, le dispositif de rigidification peut comprendre un système à double articulation de manière à réaliser le maintien de la symétrie des deux parallélogrammes. A titre d'exemple, un système comprenant un secteur d'engrenage de type compas scolaire ou par une pluralité de liaisons peut être utilisé. La figure 5^{E} représente un système à sept liaisons 342, 343, 344, 345, 341, 346, 347. La liaison 341 comprend une rainure pour le passage d'une liaison glissière et un embout 348 pour la fixation de deux liaison pivots. Deux liaisons ensembles de deux liaisons 342, 343 d'une part et 346 et 347 d'autre part sont coulissantes aux moyens d'une double liaison glissière 348 comme cela est représenté à la figure 5E. Ce mode de réalisation est compatible de la structure portante conformément à l'invention.

A noter qu'il est courant que le point d'arrêt dépasse la ligne d'alignement des points de façon à créer un effet « genouillère ».

Il est également possible de se contenter d'une solution à quatre liaisons qui reste approximative telle que représentée à la figure 5F.

Dans l'exemple de la figure 5F, il est nécessaire que les sommes A4B4+B4C4 et A4D4+D4C4 soient identiques. Le parallélisme diffère de plusieurs degrés au fur et à mesure de l'ouverture.

Enfin, il est également possible d'utiliser une croix dont deux extrémités sont à pivots et deux extrémités sont coulissantes.

Avec l'ensemble de ces solutions des figures 5A à 5F ainsi que leurs variantes non représentées, il est possible de rigidifier tout ou partie des paires de bras :
- la paire de bras supérieurs 14;
- la paire de bras de guidage 21 prolongeant les bras supérieurs 14 ;
- la paire de bras inférieurs arrière 13 qui portent les roues arrière 9 ;
- la paire de bras inférieurs avant qui portent les roues avant 12.

Dans l'hypothèse ou plusieurs paires de bras sont rigidifiées par des dispositifs dédiés se posent la question du point de vue utilisation de leurs synchronisations et de leurs verrouillages/déverrouillages.

A cette fin, des modes de réalisations peuvent être proposés afin d'améliorer le mécanisme de synchronisation du dispositif de rigidification et des dispositifs de pliage. Une zone particulièrement avantageuse pour accueillir un dispositif de propagation du pliage est la zone proche du segment DD'. En effet, le segment central de l'axe de rotation DD' est commun à la partie arrière de la structure portante accueillant le dispositif de rigidification et aux parties latérales comprenant chacune un dispositif de pliage 20.

D est un sommet de l'antiparallélogramme du dispositif de pliage situé à l'arrière de la structure portante et situé au niveau d'un premier côté de la structure. D' est son homologue situé de l'autre côté de la structure portante.

Le segment central DD' est commun :
▪ à la rotation du plan des bras arrière supérieurs ;
▪ à la rotation du plan de la croix de type Mac Laren ;
▪ à la rotation du plan des bras arrière inférieurs ;
▪ à la rotation du plan d'une paire de liaisons ED et E'D' faisant partie des antiparallélogrammes.

E' étant le point homologue au point E situé de l'autre côté de la structure portante.

Ce segment peut être matérialisé sous forme d'une charnière dont l'axe coïncide avec l'axe DD', placée en son milieu, reliant deux platines dont l'une est dans le plan de la croix de type Mac Laren et l'autre dans le plan des bras supérieurs.

La figure 6A représente une croix de type Mac Laren dans le plan horizontal. Dans le plan de la croix type Mac Laren, il faut ajouter au milieu des bras arrière de la croix deux liaisons 363 et 364 dont la longueur correspond à la moitié des bras qui vont se rejoindre au milieu de l'axe DD' que cela soit en position ouverte, intermédiaire ou fermée.

La figure 6A représente également la différence d'écartement d1 entre une position d'ouverture ou de dépliage POS_361 et une position de fermeture ou de pliage POS_362.

Dans le plan des bras arrière, dans l'hypothèse où l'on a adopté le système classique à double articulation avec coulissements décrit figure 5E, il faut également créer deux liaisons supplémentaires avec un deuxième coulisseau dédié reliés à la platine correspondante.

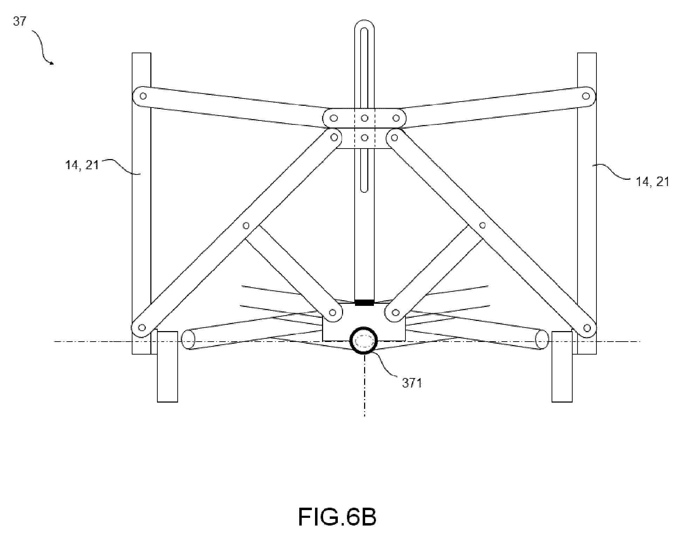

La figure 6B représente un dispositif de propagation 37 comprenant un système à double articulation avec coulissements qui vient se superposer au système 34 décrit figure 5E.

Ce dispositif permet de disposer d'un point physique 371 au milieu de l'axe de rotation des bras arrière de la structure portante.

Le dispositif de rigidification peut être utilisé pour rigidifier la structure portante avec des liaisons mécaniques supplémentaires.

Avantageusement, le dispositif de rigidification comprend une partie servant à la propagation des mouvements pour la synchronisation des pliages de la structure. Un dispositif de propagation permet de synchroniser tout ou partie des dispositifs ajoutés pour maintenir le parallélisme des paires de bras 14, 21.

Il est en particulier devenu possible de créer un point de passage pour un ou plusieurs câbles sous formes d'un anneau ou d'une poulie et de relier les dispositifs de maintien du parallélisme des bras supérieurs et inférieurs.

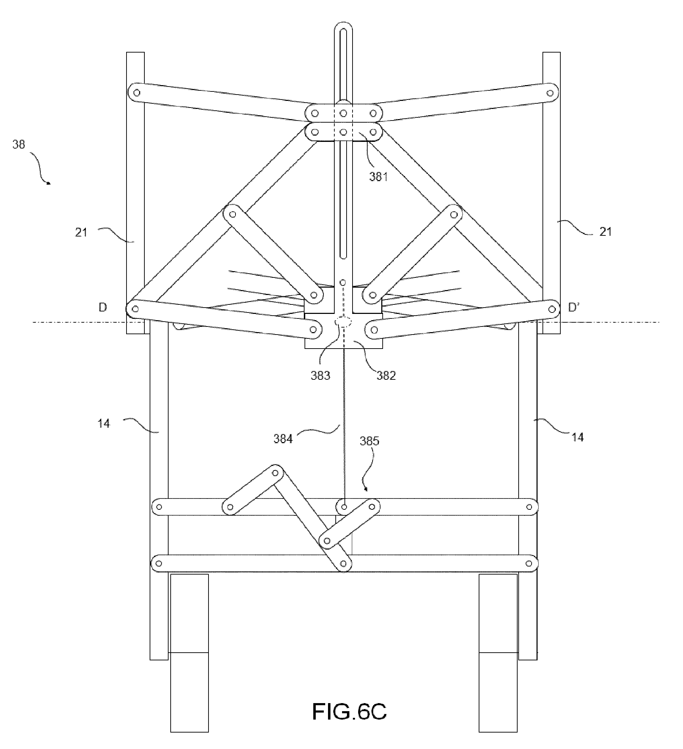

La figure 6C représente un tel mode de réalisation. Le dispositif de rigidification comprend une liaison glissière pour activer une traction avec une main sur la partie haute pour déverrouiller et commencer le dépliage du dispositif de rigidification.

Un anneau ou une poulie 383 sensiblement au milieu de l'axe DD' permet le passage d'un câble ou d'une sangle de liaison 384. L'anneau ou la poulie est maintenue au moyen d'une liaison centrale 382 permettant de relier différentes tiges de liaison par des liaisons pivots.

En reliant par un câble ou une sangle passant par le point milieu de DD' soit au travers d'un anneau ou via une poulie le coulisseau du dispositif des bras supérieur au point central du dispositif des bras inférieurs arrière :
- Une traction à la main de l'utilisateur sur la partie haute du dispositif des bras supérieurs, notamment pour le déverrouiller et/ou le replier se traduira également par une traction sur le dispositif des bras inférieurs pour le déverrouiller et/ou le replier
- une poussée au pied de l'utilisateur sur la partie basse 385 du dispositif des bras inférieurs, notamment pour finir de le déplier et/ou le déverrouiller se traduira par une traction vers le bas du coulisseau du dispositif des bras supérieurs pour finir de le déplier et/ou le verrouiller

Dans un mode amélioré, les précédentes réalisation de la structure portante peuvent comprendre un dispositif de pliage avant qui est agencé dans le plan des bras inférieurs avant 12 et 12' pour le bras avant homologue de l'autre côté de la structure portante.

Afin de réduire l'encombrement situé à l'avant de la structure portante, par exemple lorsque la structure portante est une poussette, le pliage et la rigidification du parallélisme des bras avant peut comprendre différents modes de réalisations qui peuvent se combiner :
- Les point pivots supérieurs C et C' sont directement guidés par les extrémités avant de la croix de type Mac Laren (C' est le point homologue à C de l'autre côté de la structure portante) ;
- Les point pivots E et E' peuvent être guidés par un dispositif analogue aux bras arrière inférieurs mais disposé dans le plan EE'DD' qui présente l'avantage d'être également sécant avec l'axe DD' et de pouvoir bénéficier d'un système analogue aux bras arrière avec synchronisation par un deuxième câble passant au même endroit ou quasiment par un anneau et une poulie, potentiellement mis en commun.
- Dans la mesure où l'utilisateur manipule de façon privilégiée la structure portante à l'arrière et non pas à l'avant par exemple lorsque la structure est une poussette, il convient d'ajouter un ressort de rappel local pour garantir le dépliement final du dispositif dédié à l'avant.

En alternative, une solution comprend un dispositif de pliage central d'une structure portante dans le plan horizontal comprenant des antiparallélogrammes.

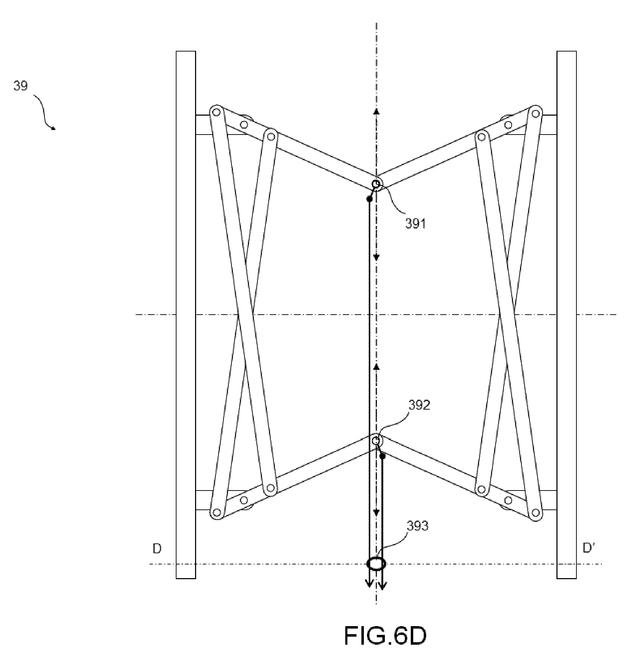

La figure 6D représente un dispositif de pliage central dans le plan horizontal comprenant un dispositif de propagation des mouvements de pliage.

Il est alors possible de relier le point central avant 391 par un câble ou une sangle via le point milieu DD' au point haut central du dispositif de rigidification, point 383 de la figure 6C dans le plan des bras supérieurs 14, 21. Une traction à la main de l'utilisateur sur la partie haute du dispositif de rigidification des bras supérieurs peut être engagée. Il est alors possible de déverrouiller et/ou replier par une traction sur le point central avant 391 pour également le déverrouiller et/ou replier la structure portante.

Il est alors possible de relier point arrière central par un câble ou une sangle via le point milieu DD' au point central du dispositif des bras inférieurs arrière. Une poussée au pied de l'utilisateur sur la partie basse du dispositif des bras inférieurs, notamment pour finir de le déplier et/ou le permet de déverrouiller la structure. Elle peut être engagée par une traction vers l'arrière sur le point central arrière 392 qui via l'action des antiparallélogrammes se traduira par une poussée vers l'avant sur le point avant central 391 pour finir de le déplier et/ou le verrouiller.

Dans une variante de réalisation, il est possible de rendre le dispositif de pliage en largeur débrayable, par exemple pour autoriser de garder sur la structure portante un accessoire qui ne se plie pas en largeur. Pour cela, il est possible de rendre les bras de la croix centrale télescopiques avec un moyen de blocage/déblocage suivant que l'on veuille activer ou inhiber le pliage en largeur.

La structure portante peut comprendre différentes applications dont une poussette à quatre roues. Elle peut être également une poussette à trois roues en jumelant une paire de bras reliée au sol par : soit une roue double jumelée, soit une roue simple.

Une application peut comprendre une paire de bras inférieurs au contact du sol au moins par une paire de roues. C'est par exemple le cas d'une table 40 telle que représentée à la figure 7. Cette dernière comprend deux dispositifs de pliage situés de part et d'autre de la structure. Ces derniers comprennent chacun des bras supérieurs avant et une barre latérale associée. Seule la partie avant comprend des roues 8 et la partie arrière comprend un ou des points de contacts 402 au sol. La table comprend un plateau 401 amovible et/ou pliable maintenu dans un plan sensiblement horizontal par les bras supérieurs avant et arrière.

Cela peut concerner notamment d'autres applications dans le même domaine de la puériculture, mais également pour du matériel de camping, du mobilier de jardin pliable, du mobilier d'appoint, du matériel de manutention.

A titre d'exemple, l'invention concerne une brouette pliable 50 comprenant un bac 501 amovible et/ou pliable. Un bras prolongateur 502 est relié au bras supérieur 14. Une roue de grande dimension, adaptée pour rouler dans des terrains de type en terre et boueux, est reliée au(x) bras inférieur(s) avant.

Dans une variante de réalisation, la structure portante est une chaise pliable. La chaise pliable de l'invention permet un gain de place lorsque cette dernière est pliée. Notamment, le pliage permet une diminution de la largeur de la chaise ainsi qu'une diminution de sa longueur pliée.

Les bras supérieurs arrière se rabattant également la chaise de l'invention une fois pliée est compact et peut être déplacée aisément et rangée dans un compartiment de faible volume comme par exemple un casier de vestiaire ou une case de rangement d'un train ou d'un avion.

Dans une variante de réalisation de l'invention, la structure portante est un tabouret pliable qui ne comprend pas de bras supérieurs avant ni arrière. Le tabouret est plié de sorte à réduire d'une part sa longueur, c'est-à-dire son empattement tel que défini dans la description (distance entre les bras inférieurs avant et arrière) et à réduire d'autre part sa largeur grâce au système central de pliage.

Selon ces deux modes de réalisation, ainsi que celui de la poussette ou du chariot, une surface de support peut être positionnée dans la zone 22 de la figure 4C. Le support peut être un tissu lâche par exemple fixé aux extrémités supérieures des bras inférieurs dans le cas d'un tabouret, c'est-à-dire aux points C et D et aux points associés du second côté de la structure portante.

La figure 9 représente un mode de réalisation de l'invention appliqué au cas du chariot. Comme précédemment, la figure 9 représente un seul côté du landau ou du chariot. Un second coté dans un plan parallèle à celui représenté permettrait d'aboutir à une vue 3D non représentée du charriot. On appelle objet le panier ou le support qui est fixé sur la structure portante pliable comportant deux cotés comme représentés sur la figure 9.

Du fait de la présence de l'antiparallélogramme CEDF des bras inférieurs on dispose déjà de deux points particuliers K et L au milieu des deux petits côtés de l'antiparallélogramme CE et DF, dont la distance reste sensiblement identique dans toutes les positions de pliage. Ces points offrent donc des points d'appuis à privilégier pour accoupler un objet à la structure portante pliable en considérant les points associés du second coté dans un plan parallèle au côté représenté sur la figure 9.

En mettant en regard des bras arrière supérieurs des bras avant supérieurs, on dispose à niveau des deux points particuliers I et J au milieu des deux petits côtés de l'antiparallélogramme AC et BD dont la distance reste sensiblement identique dans toutes les positions de pliage. Ces points présentent également un intérêt pour accoupler un objet à la structure pliable en considérant les points associés d'un second coté compris dans un plan parallèle à la structure représentée figure 9.

A titre d'exemple, s'il s'agit d'une table à langer, le support de la table étant fixé aux points I et J, on peut y fixer juste en dessous une baignoire pour bébé dans le plan comprenant les points K et L en considérant les points associés du second coté parallèle au premier coté.

Dans le cas d'un landau, on peut utiliser les points supérieurs I, J et les points associés du second coté pour fixer la nacelle du landau et les points inférieurs K, L et les points associés du second coté pour suspendre un panier.

Dans le cas d'une version multi-usage, ces points peuvent être exploités, pour fixer sur une barre s'étendant longitudinalement les reliant, des interfaces qui permettent d'échanger différentes configurations comme c'est déjà le cas des versions « trio ». Une version « trio » à 4 bras peut être conçue en vue d'être compatible de ces différentes configurations. Les versions trios permettent de fixer des supports de différentes natures tels qu'un cosy, un landau, un siège ou un siège auto. Les interfaces permettent de clipper le support notamment au niveau sensiblement horizontal comprenant les points I, J et les points associés du second coté. Il y a au moins deux interfaces présentes dans un tel système : une de chaque côté.

Dans le cas de chariot, soit chariot de manutention, soit chariot de course, on peut utiliser l'une et l'autre des possibilités.

On peut utiliser pour un chariot de manutention un casier de manutention amovible, mais aussi pliable en largeur, et dans le cas d'un chariot de course, d'une corbeille ayant le même mode de pliage. Il est envisageable dans ce cas que les bras supérieurs participent au dépliement de ce casier en le mettant en extension.

Du fait de la présence d'un système central de pliage, la solution à privilégier pour obtenir un plus grand volume est le couple de points I, J de fixation de l'antiparallélogramme ACDB supérieur qui positionne le support 601 à accoupler au-dessus du système central de pliage. Le système central de pliage étant agencé dans une zone sensiblement comprise dans le plan des points C, D et des points associés du second coté.

Le couple de fixation K, L inférieur pouvant lui servir à suspendre un plateau ou un panier inférieur comme cela est représenté par les pointillés 600.

Le système de pliage/dépliage peut présenter l'intérêt en termes de transport logistique pour compacter les dimensions du conditionnement pendant le transport, indépendamment de l'exploitation qui en serait faite par l'utilisateur final. A titre d'exemple ce système pourrait être exploité pour plier des chariots de supermarché très volumineux à transporter à l'unité depuis l'usine de fabrication et pour les déplier à la réception avec ou sans opération complémentaires.

En outre, le système peut être motorisé en utilisant un actionneur électrique. A titre d'exemple, ce dernier peut être :
- positionné dans le système central de pliage pour éloigner ou rapprocher les points C et D, par exemple un actionneur rotatif sur la croix centrale
- positionné sur le double-compas arrière, sous forme d'un actionneur linéaire pour éloigner ou rapprocher le point supérieur du double-compas et le point fixe 382 créé au milieu de l'axe DD' visible sur les figures 6B ou 6C.

Dans ce contexte de motorisation, la synchronisation des différents dispositifs des différents plans a d'autant plus d'un intérêt notamment pour accompagner ou accomplir les phases de verrouillage, déverrouillage, fermeture ou ouverture du dispositif de pliage de l'invention.

## Revendications

1. Structure portante pliable comprenant un ensemble de points d'appui coplanaires dont au moins deux points d'appuis arrière, au moins un point d'appui avant et au moins deux dispositifs de pliage (20) comprenant chacun :
• un ensemble de bras inférieurs (12, 13) comprenant au moins un bras avant (12) et un bras arrière (13) comprenant chacun respectivement une première extrémité (R1, R2), chacun étant relié à un point d'appui ;
• un antiparallélogramme (CDEF) déformable dans un plan vertical, ledit au moins antiparallélogramme (CDEF) comprenant deux segments (CD, EF) croisés ayant :
o une première (C) et une seconde (D) extrémités étant chacune fixée aux moyens d'une première et d'une seconde fixation à respectivement une première extrémité du bras inférieur avant et d'une première extrémité du bras inférieur arrière (13) ;
o une troisième (E) et une quatrième (F) extrémités étant chacune fixée au moyen d'une troisième et quatrième fixations à respectivement un premier point (E) du bras inférieur avant (12) et un premier point (F) du bras inférieur arrière (13) ;
• l'antiparallélogramme (CD, EF) se déformant par pliage entre une première position (POS_3), dite de dépliage, de la structure et une seconde position (POS_7), dite de pliage, le passage de la première position à la seconde position entrainant une réduction de l'empattement de la structure,
la structure comprenant deux côtés, la distance séparant les deux cotés définissant la largeur de la structure, chacun des cotés étant défini dans un plan vertical et comporte au moins un point d'appui arrière distinct pour chacun des côtés et au moins un point d'appui avant, ladite structure portante comprenant deux dispositifs de pliage (20), chacun comprenant un antiparallélogramme (CDEF) déformable dans le plan d'un des côtés de la structure,
la structure étant caractérisée en qu'elle comprend en outre un système central pliable permettant de réduire l'écartement de la largeur de la structure lors du passage entre la première position, dite de dépliage, et la seconde position, dite de pliage.

2. Structure portante pliable selon la revendication 1, **caractérisée en ce que** le système central pliable est une croix centrale et que la structure comprend :
• au moins un bras supérieur arrière (14) ;
• au moins une première barre latérale (CB) située dans le plan vertical, ladite première barre latérale (CB) :
∘ étant fixée au moyen d'une cinquième fixation par une première extrémité (C) de ladite première barre latérale à la première extrémité (C) du bras inférieur avant (12) ;
∘ étant fixée au moyen d'une sixième fixation au bras supérieur arrière (14) en une premier point supérieur (B) de telle sorte que la longueur de la première barre latérale (CB) est sensiblement proche du premier segment formé par la seconde (D) et la troisième (E) extrémités de l'antiparallélogramme (CDEF) et sensiblement parallèle audit premier segment (ED) ;
• un premier ensemble de roues avant et un second ensemble de roues arrière ;
• des supports de roues comprenant les bras inférieurs avant (12) et les bras inférieurs arrière (13) dont la première extrémité (R1, R2) de chacun permet de relier les axes de rotation des roues (8, 9) avec la structure portante, chaque point d'appui étant situé sur une roue.

3. Structure portante pliable selon la revendication 2, **caractérisée en ce que** la structure comprend en outre un dispositif de rigidification pliable (30-39) permettant de réduire l'écartement des bras supérieurs arrière lors du passage entre la première position, dite de dépliage, et la seconde position, dite de pliage.

4. Structure portante selon l'une quelconque des revendications 1 à 3,
**caractérisée en ce que** la première, la seconde, la troisième, la quatrième et la cinquième fixation de chacun des dispositifs de pliage et de la structure portante sont des liaisons pivot.

5. Structure portante selon les revendications 2 et 4 **caractérisée en ce que** la structure portante forme un système haptique en contact sur une surface d'appui, de telle manière que lorsqu'un mouvement de rotation est initié sur les bras arrières supérieurs (14, 21) se propageant vers les bras inférieurs (12, 13) au moyen des liaisons pivots, les roues de ladite structure portante soumises d'une part à l'effort des bras inférieurs (12, 13) en rotation et d'autre part à la force de réaction de la surface d'appui engagent un mouvement de translation sensiblement parallèle à la surface d'appui.

6. Structure portante selon l'une quelconque des revendications 1 à 5,
**caractérisée en ce que** :
• le bras inférieur avant de chaque côté de la structure effectue un premier mouvement de rotation autour de la première extrémité (C) de l'antiparallélogramme (CDEF) lors du passage de la première position à la seconde position et inversement ;
• le bras inférieur arrière et le bras supérieur arrière de chaque côté de la structure effectue un second mouvement de rotation autour de la quatrième extrémité (F) de l'antiparallélogramme (CDEF) lors du passage de la première position à la seconde position et inversement ;
• le triangle formé par la première extrémité (C) de l'antiparallélogramme (CDEF), la quatrième extrémité (F) de l'antiparallélogramme (CDEF) et le point supérieur (B), est un triangle isocèle de sommet la première extrémité (C) de l'antiparallélogramme, ledit triangle (CFB) restant isocèle dans toutes les positions de pliage.

7. Structure portante selon les revendications 2 et 6,
**caractérisée en ce que** :
• chaque dispositif de pliage comprend un premier dispositif de synchronisation du premier et du second mouvement de rotation, le premier dispositif de synchronisation du premier et du second mouvement de rotation étant réalisé au moyen de la première barre latérale (CB) ;
• la structure comprend un dispositif de synchronisation de pliage des deux dispositifs de pliage.

8. Structure portante selon l'une quelconque des revendications précédentes, **caractérisée en ce que** le dispositif de pliage comprend un bras supérieur avant (11) et une seconde barre latérale (AD), ladite seconde barre latérale (AD) :
• étant fixée au moyen d'une septième fixation par une première extrémité (D) de ladite seconde barre latérale (AD) à la première extrémité (D) du bras inférieur arrière (13) ;
• étant fixée au moyen d'une huitième fixation au bras supérieur avant (11) en une second point supérieur (A) de telle sorte que la longueur de la seconde barre latérale (AD) est sensiblement proche du second segment formé par la première (C) et la quatrième (F) extrémités de l'antiparallélogramme (CDEF) et sensiblement parallèle audit second segment (CF).

9. Structure portante selon les revendications 2 et 8,
**caractérisée en ce que** les deux barres latérales (AD, CB) forment un antiparallélogramme (ABCD), la septième et la huitième fixations étant des liaisons pivots.

10. Structure portante selon la revendication 3
**caractérisée en ce que** la structure comprend une armature de guidage (21) comprenant des moyens permettant de guider la structure portante au moyen des roues lorsque la structure portant est dans la première position, dite de dépliage, ladite armature de guidage comprenant en outre le dispositif de rigidification (30-39) pliable permettant d'une part le maintien des bras supérieurs arrière à une distance maximale prédéfinie et d'autre part de réduire l'écartement des bras supérieurs arrière lorsqu'un second pliage est réalisé, la structure portante comprenant, en outre, des moyens de propagation permettant la synchronisation du pliage d'un au moins des au moins deux dispositifs de pliage avec le pliage du dispositif de rigidification (30-39) de manière ce qu'un pliage du dispositif de rigidification entraine le pliage d'un au moins des au moins deux dispositifs de pliage.

11. Structure portante selon la revendication 10,
**caractérisée en ce que** le dispositif de rigidification (30) :
• permet de maintenir les bras arrière et les points d'appuis arrière dans un même plan ;
• est fixé aux bras supérieurs arrière de la structure portante et comprennent huit liaisons fixées par des liaisons pivot comprenant une première paire de quadrilatères isocèles de même dimensions (A1OB1E1, OC1G1D1) et une seconde paire de quadrilatères isocèles de même dimensions (F1A1OC1, H1B1OD1), chacun des quadrilatère ayant une longueur du petit côté sensiblement voisine de la longueur du grand coté les quadrilatère de la première paire étant une homothétie des quadrilatères de la seconde paire, les huit liaisons comportant une position de blocage permettant de maintenir les bras arrière à une position d'écartement maximal.

12. Structure portante selon la revendication 10,
**caractérisée en ce que** le dispositif de rigidification (31, 32, 34) comprend:
• soit une pluralité d'ensemble de tiges (310, 311, 312, 313) fixées par des liaisons pivots (E2, F2) entre elles et par des liaisons pivots (A2, B2, C2, D2) au bras supérieurs arrière (14, 21), lesdits ensembles de tiges (E2, F2) étant reliés par au moins un antiparallélogramme (A20, A21, C20, C21) permettant de synchroniser les pliage de chaque ensemble de tiges ;
• soit une barre coulissante (341) et un ensemble de tiges (342, 343, 344, 345, 346, 347) permettant de maintenir la barre coulissante (341) et entre les bras arrière (14, 21), lesdites tiges étant maintenues aux bras supérieurs arrière (14, 21) par des liaisons pivot, un premier ensemble de tiges (342, 343, 345, 346) étant relié à la barre coulissante (341) par une liaison glissière et pivot (347) et un second ensemble de tiges (344, 345) étant relié à la barres coulissante par une liaison pivot (348).

13. Structure portante selon l'une quelconque des revendications 1 à 12,
**caractérisée en ce qu'**elle est adaptée à un tabouret, une chaise ou une poussette.

14. Landau comportant une structure portante (20) selon l'une quelconque des revendications 1 à 12, ladite structure comportant deux bras avant supérieur et deux secondes barres latérales associées (11, 11') disposées à l'avant de la structure et symétrique vis-à-vis des premières barres latérales.

15. Structure portante selon l'une quelconque des revendications 1 à 12,
**caractérisée en ce qu'**elle est adaptée :
• Soit à une table pliante comportant un plateau amovible et/ou pliable ;
• Soit à une brouette pliante comportant un bac amovible et/ou pliable (501), un bras prolongateur (502).

## Patentansprüche

1. Faltbare Trägerstruktur, umfassend eine Gruppe von koplanaren Aufstützpunkten, davon mindestens zwei hintere Aufstützpunkte, wenigstens ein vorderer Aufstützpunkt, wenigstens zwei Faltvorrichtungen (20), umfassend jeweils:
• eine Gruppe von unteren Armen (12, 13), umfassend wenigstens einen vorderen Arm (12) und einen hinteren Arm (13), jeder umfassend jeweils ein erstes Ende (R1, R2), wobei jedes mit einem Aufstützpunkt verbunden ist;
• ein Antiparallelogramm (CDEF), das in einer vertikalen Ebene verformbar ist, wobei das genannte wenigstens eine Antiparallelogramm (CDEF) zwei gekreuzte Segmente (CD, EF) umfasst mit:
∘ einem ersten (C) und einem zweiten (D) Ende, die jeweils mittels einer ersten und einer zweiten Befestigung jeweils an einem ersten Ende des unteren vorderen Arms und eines ersten Endes des unteren hinteren Arms (13) befestigt sind;
∘ wobei ein drittes (E) und ein viertes (F) Ende jeweils mittels einer dritten und vierten Befestigung an jeweils einem ersten Punkt (E) des unteren vorderen Arms (12) und einem ersten Punkt (F) des unteren hinteren Arms (13) befestigt ist;
• wobei sich das Antiparallelogramm (CD, EF) per Falten zwischen einer ersten Position (POS_3), bezeichnet als entfaltete Position, der Struktur und einer zweiten Position (POS_7), bezeichnet als gefaltete Position, verformt, wobei der Übergang von der ersten Position in die zweite Position zu einer Reduzierung des Achsenabstandes der Struktur führt,
wobei die Struktur zwei Seiten umfasst, wobei die Entfernung die zwei Seiten trennt, die die Breite der Struktur definiert, wobei jede der Seiten in einer vertikalen Ebene definiert ist und wenigstens einen unterschiedlichen hinteren Aufstützpunkt für jede der Seiten und wenigstens einen vorderen Aufstützpunkt umfasst, wobei die genannte Trägerstruktur zwei Faltvorrichtungen (20) umfasst, wobei jede ein Antiparallelogramm (CDEF) umfasst, das in einer Ebene der Seiten der Struktur verformbar ist,
wobei die Struktur **dadurch gekennzeichnet ist, dass** sie darüber hinaus ein faltbares zentrales System umfasst, das die Reduzierung der Beabstandung der Breite der Struktur beim Übergang zwischen der ersten Position, bezeichnet als entfaltete Position, und der zweiten Position, bezeichnet als gefaltete Position, zulässt.

2. Faltbare Trägerstruktur gemäß Anspruch 1, **dadurch gekennzeichnet, dass** das faltbare zentrale System ein zentrales Kreuz ist und dass die Struktur umfasst:
• wenigstens einen hinteren oberen Arm (14);
• wenigstens eine erste laterale Stange (CB), die sich in einer vertikalen Ebene befindet, wobei die genannte erste laterale Stange (CB)
∘ mittels einer fünften Befestigung durch ein erstes Ende (C) der genannten ersten lateralen Stange am ersten Ende (C) des unteren vorderen Arms (12) befestigt ist;
∘ mittels einer sechsten Befestigung am oberen hinteren Arm (14) in einem ersten oberen Punkt (B) derart befestigt ist, dass die Länge der ersten lateralen Stange (CB) deutlich nahe an dem ersten Segment ist, das durch das zweite (D) und das dritte (E) Ende des Antiparallelogramms (CDEF) und deutlich parallel zum ersten Segment (ED) gebildet ist;
• eine erste Gruppe von Vorderrädern und eine zweite Gruppe von Hinterrädern;
• Radträger, umfassend die unteren vorderen Arme (12) und die unteren hinteren Arme (13), deren erstes Ende (R1, R2) jeweils die Verbindung der Rotationsachsen der Räder (8, 9) mit der Trägerstruktur zulässt, wobei jeder Aufstützpunkt sich auf einem Rad befindet.

3. Faltbare Trägerstruktur gemäß Anspruch 2, **dadurch gekennzeichnet, dass** die Struktur darüber hinaus eine faltbare Versteifungsvorrichtung (30-39) umfasst, die die Reduzierung der Beabstandung der oberen hinteren Arme beim Übergang zwischen der ersten Position, bezeichnet als entfaltete Position, und der zweiten Position, bezeichnet als gefaltete Position, zulässt.

4. Trägerstruktur gemäß Anspruch 1 bis 3, **dadurch gekennzeichnet, dass** die erste, die zweite, die dritte, die vierte und die fünfte Befestigung jeder Faltvorrichtung und der Trägerstruktur Drehpunktverbindungen sind.

5. Trägerstruktur gemäß Anspruch 2 und 4, **dadurch gekennzeichnet, dass** die Trägerstruktur ein sich mit einer Aufstützoberfläche in Kontakt befindendes haptisches System derart bildet, dass, wenn eine Rotationsbewegung auf den hinteren oberen Armen (14, 21) initiiert wird, das sich mittels Drehpunktverbindungen zu den unteren Armen (12, 13) verbreitet, die Räder der genannten Trägerstruktur, die einerseits der Beanspruchung der unteren Arme (12, 13) in Rotation und andererseits der Reaktionskraft der Aufstützstruktur unterworfen sind, eine zur Aufstützoberfläche deutlich parallele Translationsbewegung einleiten.

6. Trägerstruktur gemäß Anspruch 1 bis 5, **dadurch gekennzeichnet, dass**:
• der untere vordere Arm jeder Seite der Struktur beim Übergang von der ersten Position zur zweiten Position und umgekehrt eine erste Rotationsbewegung um das erste Ende (C) des Antiparallelogramms (CDEF) durchführt;
• der untere hintere Arm und der obere hintere Arm jeder Seite der Struktur beim Übergang von der ersten Position zur zweiten Position und umgekehrt eine zweite Rotationsbewegung um das vierte Ende (F) des Antiparallelogramms (CDEF) durchführt;
• das vom ersten Ende (C) des Antiparallelogramms (CDEF) gebildete Dreieck, das vierte Ende (F) des Antiparallelogramms (CDEF) und der obere Punkt (B) ein gleichschenkliges Dreieck an der Spitze des ersten Endes (C) des Antiparallelogramms ist, wobei das genannte Dreieck (CFB) in allen gefalteten Positionen gleichschenklig bleibt.

7. Trägerstruktur gemäß Anspruch 2 und 6, **dadurch gekennzeichnet, dass**:
• jede Faltvorrichtung eine erste Synchronisationsvorrichtung der ersten und der zweiten Rotationsbewegung umfasst, wobei die erste Synchronisationsvorrichtung der ersten und der zweiten Rotationsbewegung mittels der ersten lateralen Stange (CB) realisiert ist;
• die Struktur eine Faltsynchronisationsvorrichtung der zwei Faltvorrichtungen umfasst.

8. Trägerstruktur gemäß einem der voranstehenden Ansprüche, **dadurch gekennzeichnet, dass** die Faltvorrichtung einen oberen vorderen Arm (11) und einen zweiten lateralen Arm (AD) umfasst, wobei die zweite laterale Stange (AD):
• mittels einer siebten Befestigung durch ein erstes Ende (D) der genannten zweiten lateralen Stange (AD) am ersten Ende (D) des unteren hinteren Arms (13) befestigt ist;
• mittels einer achten Befestigung am oberen vorderen Arm (11) in einem zweiten oberen Punkt (A) derart befestigt ist, dass die Länge der zweiten lateralen Stange (AD) deutlich nahe an dem zweiten Segment ist, das durch das erste (C) und das vierte (F) Ende des Antiparallelogramms (CDEF) gebildet ist und zum zweiten Segment (CF) deutlich parallel ist.

9. Trägerstruktur gemäß Anspruch 2 und 8, **dadurch gekennzeichnet, dass** die zwei lateralen Stangen (AD, CB) ein Antiparallelogramm (ABCD) bilden, wobei die siebte und die achte Befestigung Drehpunktverbindungen sind.

10. Trägerstruktur gemäß Anspruch 3, **dadurch gekennzeichnet, dass** die Struktur ein Führungsgestell (21) umfasst, umfassend Mittel, die die Führung der Trägerstruktur mittels Rädern zulässt, wenn die Trägerstruktur sich in der ersten Position, bezeichnet als entfaltete Struktur, befindet, wobei das genannte Führungsgestell darüber hinaus eine faltbare Versteifungsvorrichtung (30 - 39) umfasst, die einerseits das Festhalten der oberen hinteren Arme in einer vorbestimmten maximalen Entfernung und andererseits die Reduzierung der Beabstandung der oberen hinteren Arme zulässt, wenn ein zweites Falten realisiert wird, wobei die Trägerstruktur darüber hinaus Verbreitungsmittel umfasst, die die Synchronisation des Faltens wenigstens einer der wenigstens zwei Faltvorrichtungen mit dem Falten der Versteifungsvorrichtung (30 - 39) derart zulässt, dass ein Falten der Versteifungsvorrichtung das Falten wenigstens einer der zwei Faltvorrichtungen nach sich zieht.

11. Trägerstruktur gemäß Anspruch 10, **dadurch gekennzeichnet, dass** die Versteifungsvorrichtung (30):
• das Festhalten der hinteren Arme und der hinteren Aufstützpunkte in einer und derselben Ebene erlaubt;
• an den oberen hinteren Armen der Trägerstruktur befestigt ist und acht Verbindungen umfasst, die durch Drehpunktverbindungen befestigt sind, welche ein erstes Paar gleichschenkliger Vierecke mit denselben Abmessungen (A1OB1E1, OC1G1D1) und ein zweites Paar gleichschenkliger Vierecke mit denselben Abmessungen (F1A10C1, H1B10D1) umfassen, wobei die Vierecke jeweils eine Länge der kleinen Seite haben, die deutlich ähnlich der Länge der großen Seite ist, wobei die Vierecke des ersten Paares eine Homothetie der Vierecke des zweiten Paares sind, wobei die acht Verbindungen eine Feststellposition umfassen, die das Festhalten des hinteren Arms in einer maximalen Beabstandungsposition zulässt.

12. Trägerstruktur gemäß Anspruch 10, **dadurch gekennzeichnet, dass** die Versteifungsvorrichtung (31, 32, 34) umfasst:
• entweder eine Gruppe aus einer Vielzahl von Stäben (310, 311, 312, 313), die durch Drehpunktverbindungen (E2, F2) untereinander und durch Drehpunktverbindungen (A2, B2, C2, D2) am oberen hinteren Arm (14, 21) befestigt sind, wobei die genannten Gruppen von Stäben (E2, F2) durch wenigstens ein Antiparallelogramm (A20, A21, C20, C21) verbunden sind, das die Synchronisation der Faltung jeder Gruppe von Stäben zulässt;
• oder eine Gleitstange (341) und eine Gruppe von Stäben (342, 343, 344, 345, 346, 347), die das Festhalten der Gleitstange (341) und zwischen den hinteren Armen (14, 21) zulässt, wobei die genannten Stäbe durch Drehpunktverbindungen an den oberen hinteren Armen (14, 21) festgehalten werden, wobei eine erste Gruppe von Stäben (342, 343, 345, 346) durch eine Gleit- und Drehpunktverbindung (347) mit der Gleitstange (341) verbunden ist und eine zweite Gruppe von Stäben (344, 345) durch eine Drehpunktverbindung (348) mit der Gleitstange verbunden ist.

13. Trägerstruktur gemäß Anspruch 1 bis 12, **dadurch gekennzeichnet, dass** sie für einen Hocker, einen Stuhl oder einen Buggy geeignet ist.

14. Kinderwagen, umfassend eine Trägerstruktur (20) gemäß Anspruch 1 bis 12, wobei die genannte Struktur zwei obere vordere Arme und zwei zugeordnete zweite laterale Arme (11, 11'') umfasst, die an der Vorderseite der Struktur angeordnet und gegenüber den ersten lateralen Stangen symmetrisch sind.

15. Trägerstruktur gemäß Anspruch 1 bis 12, **dadurch gekennzeichnet, dass** sie geeignet ist:
• entweder für einen Klapptisch, umfassend eine abnehmbare und / oder faltbare Platte;
• oder eine faltbare Schublade, umfassend einen abnehmbaren und / oder faltbaren Behälter (501), einen Verlängerungsarm (502).

## Claims

1. Folding support structure comprising a set of coplanar support points, including at least two rear support points and at least one front support point, and at least two folding devices (20) each comprising:
• a set of lower arms (12, 13) comprising at least one front arm (12) and one rear arm (13), each comprising a first end (R1, R2 respectively), each being connected to a support point;
• an antiparallelogram (CDEF) that can deform in a vertical plane, said at least one antiparallelogram (CDEF) comprising two crossed segments (CD, EF) with:
• a first end (C) and a second end (D) each being fixed by a first and a second attachment to a first end of the front lower arm and a first end of the rear lower arm (13) respectively;
• a third end (E) and a fourth end (F) each being fixed by a third and a fourth attachment to a first point (E) of the front lower arm and a first point (F) of the rear lower arm (13) respectively;
• the antiparallelogram (CD, EF) deforming by folding between a first position (POS_3) of the structure called the unfolded position, and a second position (POS_7) called the folded position, changing from the first position to the second position causing a reduction in the base width of the structure,
the structure comprising two sides, the distance separating the two sides defining the width of the structure, each of the sides being defined in a vertical plane and comprises at least one distinct rear support point for each of the sides and at least one front support point, said support structure comprising two folding devices (20), each comprising an antiparallelogram (CDEF) that can deform in the plane of one of the sides of the structure,
the structure being **characterised in that** it also comprises a central folding system that can reduce the separation distance along the direction of the structure width when changing from the first position called the unfolded position to the second position, called the folded position.

2. Folding support structure according to claim 1, **characterised in that** the folding central system is a central cross and that the structure comprises:
• at least one rear upper arm (14);
• at least one first lateral bar (CB) located in the vertical plane, said first lateral bar (CB):
• being fixed by means of a fifth attachment by a first end (C) of said first lateral bar to the first end (C) of the front lower arm (12);
• being fixed by means of a sixth attachment to the rear upper arm (14) at a first upper point (B) such that the length of the first lateral bar (CB) is approximately the same as width of the first segment formed by the second end (D) and the third end (E) of the antiparallelogram (CDEF) and approximately parallel to said first segment (ED);
• a first set of front wheels and a second set of rear wheels;
• wheel supports including front lower arms (12) and rear lower arms (13) the first end (R1, R2) of each connecting rotation axes of the wheels (8, 9) with the support structure, each support points being located on a wheel.

3. Folding support structure according to claim 2, **characterised in that** the structure also comprises a folding stiffening device (30-39) that reduces the separation distance between the rear upper arms when changing from the first position called the unfolded position to the second position, called the folded position.

4. Support structure according to any one of claims 1 to 3, **characterised in that** the first, second, third, fourth and fifth attachments of each of the folding devices and the support structure are pivot links.

5. Support structure according to claims 2 and 4, **characterised in that** the support structure forms a haptic system in contact with a support surface, such that when a rotation movement is initiated on the rear upper arms (14, 21) propagating towards the lower arms (12, 13) through pivot links, the wheels of said support structure on which firstly a rotation force applied by the lower arms (12, 13) and secondly a reaction force applied by the support surface initiate a translation movement approximately parallel to the support surface.

6. Support structure according to any one of claims 1 to 5, **characterised in that**:
• the front lower arm on each side of the structure makes a first rotation movement about the first end (C) of the antiparallelogram (CDEF) when changing from the first position to the second position and vice versa;
• the rear lower arm and rear upper arm of each side of the structure makes a second rotation movement about the fourth end (F) of the antiparallelogram (CDEF) when changing from the first position to the second position and vice versa;
• the triangle formed by the first end (C) of the antiparallelogram (CDEF), the fourth end (F) of the antiparallelogram (CDEF) and the upper point (B) is an isosceles triangle with the first end (C) of the antiparallelogram (CDEF) at its vertex, said triangle (CFB) remaining isosceles in all folding positions.

7. Support structure according to claims 2 and 6, **characterised in that**:
• each folding device comprises a first device for synchronisation of the first and second rotation movements, the first synchronisation device of the first and second rotation movements being made using the lateral bar (CB);
• the structure comprises a device for synchronisation of folding of the two folding devices.

8. Support structure according to any one of the previous claims, **characterised in that** the folding device comprises one front upper arm (11) and one second lateral bar (AD), said second lateral bar (AD):
• being fixed by means of a seventh attachment by a first end (D) of said second lateral bar (AD) to the first end (D) of the rear lower arm (13);
• being fixed by means of an eighth attachment to the front upper arm (11) at a second upper point (A) such that the length of the second lateral bar (AD) is approximately the same as the length of the second segment formed by the first end (C) and the fourth end (F) of the antiparallelogram (CDEF) and approximately parallel to said second segment (CF).

9. Support structure according to claims 2 and 8, **characterised in that** the two lateral bars (AD, CB) form an antiparallelogram (ABCD), the seventh and the eighth attachments being pivot links.

10. Support structure according to claim 3, **characterised in that** the structure comprises a guide reinforcement (21) comprising means of guiding the support structure with wheels when the support structure is in the first position, called the unfolded position, said guide reinforcement also comprising the folding stiffening device (30-39) that firstly holds the rear upper arms at a predefined maximum distance and secondly reduces the spacing between the rear upper arms when a second folding is made, the support structure also comprising propagation means for synchronisation of folding of at least one of the at least two folding devices with folding of the stiffening device (30-39) such that folding of the stiffening device causes folding of at least one of the at least two folding devices.

11. Support structure according to claim 10, **characterised in that** the stiffening device (30):
• holds the rear arms and the rear support points in the same plane;
• is fixed to the rear upper arms of the support structure and comprises eight attachments fixed by pivot links comprising a first pair of isosceles quadrilaterals with the same dimensions (A10B1E1, OC1G1D1), and a second pair of isosceles quadrilaterals with the same dimensions (F1A10C1, H1B10D1), each of the quadrilaterals having a short side length approximately the same as the long side length, the quadrilaterals in the first pair being homothetic with the quadrilaterals in the second pair, the eight links comprising a locking position in which the rear arms are held at a position of maximum separation.

12. Support structure according to claim 10, **characterised in that** the stiffening device (31, 32, 34) comprises:
• either a plurality of sets of rods (310, 311, 312, 313) fixed by pivot links (E2, F2) to each other and by pivot links (A2, B2, C2, D2) to the rear upper arms (14, 21), said sets of rods (E2, F2) being connected by at least one antiparallelogram (A20, A21, C20, C21) that synchronises folding of each set of rods;
• or a sliding bar (341) and a set of rods (342, 343, 344, 345, 346, 347) to hold the sliding bar (341) in position and between the rear arms (14, 21), said rods being held to the rear upper arms (14, 21) by pivot links, a first set of rods (342, 343, 345, 346) being connected to the sliding bar (341) through a sliding and pivot link (347) and a second set of rods (344, 345) being connected to the sliding bar by a pivot link (348).

13. Support structure according to any one of claims 1 to 12, **characterised in that** it is suitable for a stool, a chair or a pushchair.

14. Pram comprising a support structure (20) according to any one of claims 1 to 12, said structure comprising two front upper arms and two associated second lateral bars (11, 11') located at the front of the structure and symmetric with the first lateral bars.

15. Support structure according to any one of claims 1 to 12, **characterised in that** it is adaptable:
• either to a folding table comprising a removable and/or folding plate;
• or to a folding wheelbarrow comprising a removable and/or folding bin (501), an extension arm (502);
